# EUROPÄISCHE PATENTSCHRIFT

(11) **EP 2 733 522 B1**
(45) Veröffentlichungstag und Bekanntmachung des Hinweises auf die Patenterteilung: **09.06.2021**
(21) Anmeldenummer: 14000501.8
(22) Anmeldetag: 12.10.2010
(51) Int. Cl.: G02F 1/133, G02F 1/1335, B32B 17/10, G09F 9/35

(54) **Anzeigevorrichtung**
Display unit
Module de visualisation

(30) Priorität: 28.10.2009 DE 102009051116; 17.03.2010 DE 202010003683 U
(43) Veröffentlichungstag der Anmeldung: 21.05.2014
(62) Teilanmeldung aus: 10771655.7
(73) Patentinhaber: Schott AG, 55122 Mainz (DE)
(72) Erfinder: Walther, Marten, 31061 Alfeld (DE); Reimann, Stephan, 31073 Grünenplan (DE)
(74) Vertreter: Sawodny, Michael-Wolfgang

(56) Entgegenhaltungen:
- EP-A1- 0 626 142
- EP-A1- 2 063 312
- DE-A1- 10 103 088
- DE-A1- 19 644 004
- DE-C1- 19 927 683
- US-B1- 6 924 037

## Beschreibung

Die vorliegende Erfindung betrifft eine Anzeigevorrichtung.

Die Anzeigevorrichtung umfasst wenigstens ein erstes scheibenförmiges Element und ein zweites scheibenförmiges Element und eine zwischen dem ersten und zweiten scheibenförmigen Element eingebrachte Beschichtung.
Insbesondere bei Anzeigevorrichtungen, die bevorzugt im Außenbereich Anwendung finden, ergibt sich das Problem, dass die Anzeigevorrichtungen mit Hilfe aufwändiger Kühlaggregate gekühlt werden müssen, um ein unzulässiges Aufheizen derselben zu verhindern.

Dies ist insbesondere dann problematisch, wenn die Anzeigevorrichtungen im Außenbereich hoher Sonneneinstrahlung ausgesetzt sind. Anzeigevorrichtungen können beispielsweise Displays umfassen. Die Displays können selbst mit Polarisatoren ausgestaltet sein oder selbst polarisiertes Licht emittieren.

Um ein Aufheizen durch Sonneneinstrahlung zu verhindern, wird bei Anzeigevorrichtungen, z. B. Displays gemäß dem Stand der Technik beispielsweise eine IR-Strahlung reflektierende SIPLEX-Solar Control Folie, hergestellt als Verbundglas durch die Firma Haller (Kirchlengern) auf das Glas, insbesondere die Scheibe, bevorzugt der Vorsatzscheibe der Anzeigevorrichtung aufgebracht. Bei einer derartigen Lösung ergibt sich jedoch immer noch eine Transmission im IR-Bereich, das heißt im Wellenlängenbereich von 780 bis 2000 nm von 28%, was dazu führt, dass ein Aufheizen der hinter mit einer derartig ausgerüsteten Scheibe liegenden Anzeigevorrichtung durch Lichteinstrahlung, insbesondere Sonneneinstrahlung nicht ausreichend vermieden werden kann. Für das Aufheizen durch Sonneneinstrahlung ist insbesondere Strahlung mit Wellenlängen im Bereich 700 nm bis ca. 1200nm relevant, da das Sonnenspektrum in diesem Wellenlängenspektrum noch nennenswert Energie aufweist. Weiterhin wird von der SIPLEX-Solar-Control- Folie ein hoher Anteil an Strahlung absorbiert, so dass sich die Frontscheibe stark erwärmt und die Wärme beispielsweise an das dahinterliegende Display abgibt.

Weitere Folien, die einen Wärmeeintrag durch externe Sonneneinstrahlung absenken sind beispielsweise Laminate, die eine XIR-Folie der Firma Southwall, Palo Alto, California, USA (Internet: www.southwall.com) enthalten. Bei dieser Folie wird ein höherer Anteil der nicht erwünschten Sonneneinstrahlung im IR-Spektralbereich reflektiert, so dass eine leichte Absenkung der Einstrahlung auf das dahinter angeordnete Display bzw. Anzeigevorrichtung zu sehen ist. Allerdings ist diese XIR-Folie sehr stark absorbierend, so dass das Frontglas selber stärker aufgeheizt wird als bei Einsatz der Siplex Solar-control Folie. Zudem ist die XIR-Folie in einem Laminatverbund eingebracht, was zu starken optischen Inhomogenitäten führt, so dass ein praktischer Einsatz im Bereich der Display-Gläser nicht möglich ist.

Ein Nachteil der zuvor genannten Folien ist, dass geringe Transmission mit einer hoher Absorption erkauft wird. Dies führt dazu, dass sich die Frontscheibe, z. B. eine Anzeigevorrichtung, aufheizt und durch die Wärmeabstrahlung Hitze in das Gesamtsystem, hier die Anzeigevorrichtung, eingetragen wird

Ein weiterer Nachteil der zuvor genannten Lösungen war, dass die Beeinflussung sich auf den Infraroten Spektralbereich, d.h. im Wellenlängenbereich von 780 bis 2500 nm, beschränkt. Gerade im sichtbaren Bereich von 380 nm bis 780 nm wirkt jedoch ein erheblicher Anteil der Sonneneinstrahlung und führt zusätzlich zum Infrarotbereich zu erheblichen Temperaturerhöhungen des Displays hinter einer Frontscheibe einer Anzeigevorrichtung. Gerade in Gegenden mit hoher Sonneneinstrahlung führt dies dazu, dass ein Aufheizen der hinter einer mit einer derartig ausgerüsteten Scheibe liegenden Anzeigevorrichtung durch Lichteinstrahlung, insbesondere Sonneneinstrahlung nicht ausreichend vermieden werden kann und das Display oberhalb seiner maximal zulässigen Arbeitstemperatur aufgeheizt wird. Dies bewirkt, dass das Display schwarz wird und nicht mehr lesbar ist. Für das Aufheizen durch Sonneneinstrahlung ist das gesamte Spektrum mit Wellenlängen im Bereich 300 nm bis circa 2500 nm relevant. Im Allgemeinen zielen die bekannten Lösungen zur Verminderung der Sonneneinstrahlung nur auf den Infrarotbereich von 780 - 2500 nm ab, in denen das menschliche Auge nicht empfindlich ist und lassen den sichtbaren Spektralbereich im wesentlichen unbeeinflusst, obwohl das Sonnenspektrum in diesem Wellenlängenbereich noch nennenswert Energie aufweist.

Passive Methoden zur Verringerung des Energieeintrags im sichtbaren Wellenlängenbereich sind Beschichtungen, die einen hohen Anteil des sichtbaren Lichtes reflektieren und somit den Energieeintrag senken. Als Beispiel hierfür sei das Produkt MIRONA von der Firma SCHOTT AG zu nennen, das eine Reflexion von ca. 35% im sichtbaren Bereich aufweist. Der Nachteil dieser Lösung ist, dass der Kontrast der dahinterliegenden Anzeigevorrichtung durch diese Reflektivität deutlich herabgesenkt wird. Das Verhältnis der gewünschten Strahlung von der Anzeigevorrichtung zum Betrachter in Bezug auf die Strahlung, die von der Umgebung an der Vorderseite der Frontscheibe der Anzeigevorrichtung zum Betrachter reflektiert wird, wird bei höherer Umgebungshelligkeit immer schlechter und führt oft zu völliger Unlesbarkeit der Anzeigevorrichtung bei hellem Tageslicht. Als Lösung zur Verbesserung dieses Kontrastes werden hier oft mit einer Antireflexbeschichtung beschichtete Scheiben eingesetzt, die dann aber keinen wirksamen Sonnenschutz im sichtbaren Bereich aufweisen.

Ein weiterer Nachteil der Folien insbesondere bei Verwendung in einer Anzeigevorrichtung war, dass sie schlechte optische Eigenschaften aufwiesen.

Aus der US 2009/0237782 A1 ist eine Verbundglasscheibe mit einer IR-reflektiven Schicht bekannt geworden, insbesondere für großflächige Verglasungen.

Die DE15 96 810 A1 zeigt eine großflächige Verglasung mit einer Metallschicht, insbesondere einer Gold- oder Kupferschicht, die Infrarotstrahlung und langwelliges Licht reflektiert.

Aus der DE199 27 683 C ist eine Sonnen- und Wärmestrahlen reflektierende Verbundglasscheibe bekannt geworden.

Die DE195 03 510 A1 zeigt ein Verfahren zur Herstellung einer IR-reflektierenden Verbundglasscheibe.

Die DE694 30 986 T zeigt ein Lichtventil mit einem Überzug niedrigen Emissionsvermögens als Elektrode.

Die US 6,924,037 B zeigt ein transparentes Substrat mit einer antireflektierenden Beschichtung, die aus einem Stapel dünner Schichten aus einem dielektrischen Material bestehen. Die aufeinander aufgebrachten Schichten haben abwechselnd einen hohen und einen niedrigen Brechungsindex. Der Brechungsindex liegt zwischen 1,8 und 2,2; die Dicke der Schichten zwischen 5 und 50 nm. Die aus der US 6,924,073 B bekannten Schichtsysteme können als antireflektierende Beschichtung auf ein transparentes Substrat aufgebracht werden.

Anzeigeeinrichtungen sind aus der DE28 24 195 A1 oder der JP2006-162890 A bekannt geworden.

Die EP 2063312 A1 beschreibt eine Anzeigeeinheit, umfassend einen in einem Rahmen angeordneten Bildschirm wie Flachbildschirm mit einem LCD sowie ein unter Einhaltung eines Luftspaltes vor dem LCD angeordnetes entspiegeltes Schutzglas. Um die Erkennbarkeit der visuellen Information insbesondere bei hellem Umgebungslicht oder direktem Lichteinfall sowohl im Innen- als auch im Außenbereich über einen großen Temperaturbereich zu verbessern ist vorgesehen, dass das LCD als transreflektives LCD ausgebildet ist, dass das Schutzglas einen Infrarotfilter zur Absorption und/oder Reflexion von einfallender Wärmestrahlung aufweist, dass der Luftspalt zwischen LCD und Schutzglas als Strömungskanal für die Zuführung eines Mediums zum Abtransport von durch das LCD und/oder äußere Einstrahlung entstehender Wärme oder zur Zuführung von Wärme bei niedriger Außentemperatur ausgebildet ist.

Aufgabe der Erfindung ist es , eine Einrichtung zur Verfügung zu stellen, die die Nachteile des Standes der Technik vermeidet.

Erfindungsgemäß wird diese Aufgabe durch eine Anzeigevorrichtung gemäß Anspruch 1 gelöst.

Die Anzeigevorrichtung besteht aus einem ersten scheibenförmigen Element und einem zweiten scheibenförmigen Element, wobei eine IR-reflektierende Beschichtung zwischen das erste scheibenförmige und das zweite scheibenförmige Element eingebracht wird, und zwar derart, dass das erste und das zweite scheibenförmige Element einen Verbund ausbilden, wobei der Raum zwischen den Scheiben mit einem festen oder flüssigen Füllmaterial ausgefüllt wird. Das Füllmaterial ist also nicht gasförmig, wie bei Isolierglasverbunden.

Ein derartiger Verbund ermöglicht es, dass IR-reflektierende Beschichtungen, beispielsweise basierend auf transparenten Metall-, insbesondere Silberschichten, sogenannte low-E-Beschichtungen, eingesetzt werden können, die eine sehr hohe Reflektivität im Bereich des IR-Strahlung von 780nm bis 2000nm aufweisen.

Dadurch, dass die IR-reflektierende Beschichtung, zwischen das erste und zweite scheibenförmige Element eingebracht und von diesem geschützt wird, ist es möglich, hocheffiziente, aber korrosionsanfällige Silber-Ein- oder Mehrfachschichten als IR-reflektierende Beschichtungen einzusetzen und gegen chemische und mechanische Angriff, speziell Oxidation zu schützen.

Derartige, hochreflektive IR-Beschichtungen basierend auf Silberschichten werden als sogenannte "Soft-Coatings" bezeichnet und sind beispielsweise sehr eingehend in "Hans-Joachim Gläser, Dünnfilmtechnologie auf Flachglas, S. 167 - 171" beschrieben. Der Offenbarungsgehalt dieser Schrift wird in die vorliegende Anmeldung vollumfänglich mit aufgenommen. Um die Korrosionsanfälligkeit der zwischen dem ersten scheibenförmigen Element und dem zweiten scheibenförmigen Element eingebrachten Beschichtung zu minimieren, ist vorteilhafterweise vorgesehen, dass der Rand des ersten scheibenförmigen Elementes und/oder des zweiten scheibenförmigen Elementes keine IR-reflektierende Beschichtung aufweist. Besonders bevorzugt ist es, wenn die IR-reflektierende Beschichtung eine sehr hohe Reflektivität im Wellenlängenbereich von 780 nm bis 2500 nm aufweist. Im Idealfall würde die Reflektivität 100 % für Wellenlängen im Bereich von 780 nm bis 2500 nm betragen.

Nähert man die von der Sonne abgegebene Strahlung, also das Spektrum des Sonnenlichts, durch einen Planck'schen Strahler mit einer Temperatur T_{STRAHLER} = 5762 K an, so kann man ableiten, dass bei Vernachlässigung des UV-Anteils mit Wellenlängen < 350 nm ungefähr 55 % der Energie bzw. der Intensität des Sonnenlichtes im sichtbaren Wellenlängenbereich von 350 nm bis 780 nm liegt und ungefähr 45 % der Energie im IR-Wellenlängenbereich von 780 nm bis 2500 nm. Bei einem idealen IR-Spiegel mit einer Reflektivität von 100 % im Wellenlängenbereich von 780 nm bis 2500 nm würden somit 45 % des Sonnenlichts, nämlich der IR-Anteil reflektiert.

Um die Güte der Reflektivität der Beschichtung für IR-Strahlung anzugeben, wird in vorliegender Anmeldung die IR-Sonnenreflektivität definiert. Als IR-Sonnenreflektivität wird die spektrale Reflektivität der IR-Beschichtung im Wellenlängenbereich von 780 nm bis 2500 nm gefaltet mit der relativen Intensität des genäherten Spektrums des Sonnenlichts für einen Planck'schen Strahler mit einer Temperatur von 5762 K in dieser Anmeldung definiert. Während die so definierte IR-Sonnenreflektivität für Folien gemäß dem Stand der Technik, also beispielsweise XIR-Folien im Laminatverbund bei ungefähr 40 % liegt, zeichnen sich Systeme mit einer erfindungsgemäßen IR-Beschichtung durch eine IR-Sonnenreflektivität im Bereich von 45 % bis 95 %, bevorzugt von 50 % bis 80 % aus.

Als festes bzw. flüssiges Füllmaterial, welches zwischen die beiden Scheiben eingebracht wird, werden bevorzugt Polymermaterialien, ausgehärtete anorganische Materialien, beispielsweise Gießharz oder Folie, wie beispielsweise PCB-Folien, PVB-Folien, EVA-Folien verwandt.

Die zuvor genannten Folien können zusätzlich zu der erfindungsgemäßen IR-Strahlung reflektierenden Beschichtung auch noch weitere Beschichtungen, beispielsweise auf Folie aufgebrachte weitere low-E-Schichten umfassen.

Die die IR-Strahlung hochreflektierende Beschichtung kann entweder auf einer oder beiden der scheibenförmigen Elemente aufgebracht werden oder auf die Folie, die zwischen die Scheiben einlaminiert wird.

Zur Herstellung des Verbundes beispielsweise mittels eines Polymermaterials, einer PCB-Folie, einer PVB-Folie oder einer EVA-Folie wird das Polymermaterial bzw. die Folie durch Druck verflüssigt oder erweicht und mit dem ersten scheibenförmigen Element und dem zweiten scheibenförmigen Element verklebt, ergebend den Verbund. Hierbei ist es bevorzugt so, dass die hochreflektierende IR-Beschichtung direkt verklebt wird.

Besonders bevorzugt im Hinblick auf Korrosionsbeständigkeit ist es, wenn der Rand des ersten scheibenförmigen Elementes und des zweiten scheibenförmigen Elementes ein Dichtmaterial umfasst. Ein mögliches Dichtmaterial, welches hierfür verwandt werden kann, ist beispielsweise Butylkautschuk, der sich durch geringe Gasdurchlässigkeit auszeichnet. Eine alternative Dichtungsmöglichkeit ist die Dichtung durch eine umlaufende Aluminiumfolie, die wiederum mit einem Kunststoff mit geringer Gasdurchlässigkeit verklebt wird.

Neben der oben erwähnten low-E-Beschichtung basierend auf Silberschichten wie beispielsweise in Hans-Joachim Gläser, "Dünnfilmtechnologie auf Flachglas", Verlag Karl Hoffmann, 1999, S. 155 - 200 beziehungsweise 219 - 228 beschrieben, können auch andere Schichten mit sehr guter Leitfähigkeit angewendet werden. Beispiele hierfür sind Gold- oder Aluminiumschichten.

Der Rand des ersten und/oder zweiten scheibenförmigen Elementes sollte so ausgestaltet sein, dass die aufgebrachten low-E Schichten nicht von der Seite des Verbundes her korrodieren. Als wirksames Mittel kann beispielsweise das Randentschichten eingesetzt werden, bei dem die Low -E Schicht nicht bis zum Rand durchgeht und so das Laminat am Rande direkt zwischen oberem und unteren Glas versiegelt werden kann.

Bevorzugt sind wenigstens 5 mm der Scheibe als Rand ausgebildet, in denen die IR-reflektierende Beschichtung unterbrochen ist bzw. der keine IR-reflektierende Beschichtung aufweist. Die Maximalgrenze des Randes wird so gewählt, dass der sichtbare Bereich für den Betrachter der Verbundglasscheibe nicht gestört wird.

Um den Kontrast und damit die Anzeigequalität, insbesondere bei Verwendung des Glases im Anzeigebereich, d. h. für Anzeigevorrichtungen zu erhöhen, ist vorgesehen, dass das erste und/oder das zweite scheibenförmige Element mit einer Entspiegelungs- oder Antireflexbeschichtung ausgerüstet ist.

Durch das Versehen der Einrichtung mit wenigstens einer Entspiegelungsbeschichtung bzw. Antireflexbeschichtung wird insbesondere die Reflexion im sichtbaren Wellenlängenbereich von 380nm bis 800nm eines scheibenförmigen Elementes deutlich vermindert und so der Kontrast gegenüber Einrichtungen ohne Entspiegelungsbeschichtung deutlich erhöht. Bevorzugt wird der Reflexionsgrad Rᵥᵢₛ durch die Entspiegelungsbeschichtung um 10% bis 4% gegenüber einem nicht mit einer Entspiegelungsbeschichtung versehenen scheibenförmigen Element verringert. Beträgt der Reflexionsgrad Rᵥᵢₛ des scheibenförmigen Elementes ohne Entspiegelungsbeschichtung beispielsweise 8%, so kann durch die Entspiegelungsbeschichtung der Reflexionsgrad Rᵥᵢₛ auf 0,1% bis 6%, bevorzugt auf 0,2% bis 4% reduziert werden. Bei dem zuvor genannten Reflexionsgrad Rᵥᵢₛ handelt es sich um einen Reflexionsgrad bei Normlicht D65 (künstlichem Tageslicht), gefaltet mit der Augenempfindlichkeit. Obwohl die Reflexion für einzelne Wellenlängen größer als beispielsweise 2% sein kann, kann sich für das Normlicht D65 ein Wert Rᵥᵢₛ von 1% oder geringer ergeben.

Um eine hohe IR-Reflexion und insbesondere eine IR-Sonnenreflektivität im Bereich 45 % bis 95 %, bevorzugt von 50 % bis 80 %, für das Gesamtsystem aus den beiden scheibenförmigen Elementen und der zwischen diesen eingebrachten festen und flüssigen Füllmaterialien zu erreichen, wird das low-E Beschichtungssystem, basierend auf mindestens einer Silberschicht zum Erreichen hoher IR-Reflexion, angepasst. Hierzu werden die Schichten, die das Silber umgeben so angepasst, dass die Entspiegelungswirkung an die Brechzahl des festen oder flüssigen Füllmaterials, insbesondere die Laminierfolie, z. B. der PVB-Folie angepasst ist. Beispielsweise kann eine derartige Brechzahlanpassung mit Kathodenzerstäubung erreicht werden. Beispielsweise weist die Kathodenzerstäubung eine Vielzahl von oxidischen Materialien auf, mithilfe derer eine derartige Anpassung durchgeführt werden kann. Als Basis der low-E-Beschichtungen kann beispielsweise die von der Fa. ARCON (Bucha, Feuchtwangen) hergestellten Sonnenschutzschichten Sunbelt Platin verwendet werden, die gemäß den oben angegebenen Regeln modifiziert, d. h. an die Brechzahl des festen oder flüssigen Füllmaterials, insbesondere der Folien, angepasst wird.

Insbesondere ist es durch Einbringen von Anpassungsschichten, die bevorzugt oxidische oder oxidisch leitfähige Schichten umfassen, möglich, dass die Reflektivität R_{Vis} der Einrichtung < 2 %, insbesondere < 1 % ist.

Durch die Verminderung der Reflexion an der Oberfläche des Verbundes bedingt durch die Antireflex-Beschichtung bzw. Entspiegelungsbeschichtung sowie innerhalb des Verbundes durch die low-E-Schicht und gegebenenfalls Anpassungsschichten wird der Kontrast gegenüber einem nicht mit einer Entspiegelungsbeschichtung versehenen Element deutlich erhöht. Als Entspiegelungsbeschichtungen werden bevorzugt Interferenzschichtsysteme eingesetzt. Bei solchen Systemen wird an den Grenzflächen der Entspiegelungsbeschichtung Licht reflektiert. Die an den Grenzflächen reflektierten Wellen können sich durch Interferenz sogar völlig auslöschen, wenn Phasen- als auch Amplitudenbedingung erfüllt sind.

Derartige Entspiegelungsbeschichtungen sind beispielsweise in den Produkten AMIRAN, CONTURAN, oder MIROGARD der Schott AG realisiert. Betreffend ein Interferenz-Schichtsystem für breitbandige Entspiegelung wird auch auf die EP-A-1248959 verwiesen, deren Offenbarungsgehalt vollumfänglich in die vorliegende Anmeldung mit aufgenommen wird.

Neben der Verminderung der Reflexion Rᵥᵢₛ im optisch sichtbaren Spektralbereich 380nm bis 780nm kann durch die Entspiegelungsbeschichtung auch eine Erhöhung der Transmission bevorzugt um bis zu 10% erreicht werden.

Die Entspiegelungs- oder Antireflexbeschichtung wird bevorzugt auf einer nach außen, d. h. zur Luft hin gerichteten Seite des ersten und/oder des zweiten scheibenförmigen Elementes vorgesehen. Als Entspiegelungs- beziehungsweise Antireflexbeschichtungen kommen Schichten, die nach unterschiedlichen Verfahren hergestellt sind, in Betracht. Derartige Schichten können nach einem Sol-Gel-Verfahren, nach Sputterverfahren, nach Ätzverfahren oder in einem CVD-Verfahren hergestellt werden. Im Einzelnen kann die Entspiegelungsbeschichtung mit einem der nachfolgenden Auftragsverfahren aufgebracht werden:
a) Die Entspiegelungsbeschichtung wird mit Hilfe der Flüssigtechnologie aufgebracht, wobei die mit Hilfe der Flüssigtechnologien aufgebrachte Schicht mit Hilfe einer der nachfolgenden Techniken zur Verfügung gestellt wird:
   - die Entspiegelungsbeschichtung wird mit Hilfe der Sol-Gel-Technologie aufgebracht;
   - die Entspiegelungsbeschichtung wird als Einfachinterferenzbeschichtung aus der Sol-Gel-Technologie hergestellt;
   - die Entspiegelungsbeschichtung wird als Mehrfach-Interferenzbeschichtung aus der Sol-Gel-Technologie hergestellt;
   - die Entspiegelungsbeschichtung wird als Dreifach-Interferenz-Beschichtung aus der Sol-Gel-Technologie hergestellt, wobei die erste Schicht eine Brechzahl zwischen 1,6 und 1,8 aufweist, die zweite Schicht eine Brechzahl zwischen 1,9 und 2,5 aufweist und die Brechzahl der dritten Schicht zwischen 1,4 und 1,55 liegt.
b) die Entspiegelungsbeschichtung wird mit Hilfe einer Hochvakuumtechnologie hergestellt, wobei die mit Hilfe der Hochvakuumtechnologie aufgebrachte Schicht mit einer der nachfolgenden Techniken zur Verfügung gestellt wird:
   - die Entspiegelungsbeschichtung wird mit Hilfe einer Hochvakuumtechnologie als Mehrfach-Interferenzschichtsystem hergestellt;
   - die Entspiegelungsbeschichtung wird mit Hilfe einer Hochvakuumtechnologie als Einfachschichtsystem hergestellt;
   - die Entspiegelungsbeschichtung wird aus einem Sputterprozess unter Hochvakuum hergestellt;
   - die Entspiegelungsbeschichtung wird aus einem Aufdampfprozess unter Hochvakuum hergestellt.
c) die Entspiegelungsbeschichtung wird mit Hilfe eines CVD-Verfahrens hergestellt, wobei die mit Hilfe eines CVD-Verfahrens aufgebrachte Schicht mit einer der nachfolgenden Techniken zur Verfügung gestellt wird:
   - die Entspiegelungsbeschichtung wird aus einem Online-CVD-Prozess hergestellt;
   - die Entspiegelungsbeschichtung wird aus einem Offline-CVD-Prozess hergestellt.
d) die Entspiegelungsbeschichtung wird mit Hilfe eines Ätzverfahrens hergestellt, wobei die mit Hilfe eines Ätzverfahrens aufgebrachte Schicht mit einer der nachfolgenden Techniken zur Verfügung gestellt wird:
   - die Entspiegelungsbeschichtung wird mit Hilfe eines Ätzverfahrens als poröse Schicht hergestellt;
   - die Entspiegelungsbeschichtung wird mit Hilfe eines Ätzverfahrens als lichtstreuende Oberfläche hergestellt.

Als Verwendung kommt für die Erfindung, die sich insbesondere dadurch auszeichnet, dass sie zum einen eine hohe IR-Reflektivität aufweist, eine Verwendung im Bereich von Anzeigevorrichtungen im Außenbereich, und hier bevorzugt Flüssigkeitsanzeigevorrichtungen in Betracht. Bei Einsatz einer Entspiegelungsbeschichtung können hohe Kontraste, beispielsweise Kontraste, die im Bereich von 40 bis 80 liegen, erreicht werden, ohne Beschränkung hierauf. Neben der Einrichtung, insbesondere der Scheibe für eine Anzeigevorrichtung stellt die Erfindung auch eine Anzeigevorrichtung mit einem Display bzw. einer Displayvorrichtung und einer Vorsatzscheibe zur Verfügung, wobei die Vorsatzscheibe als erfindungsgemäße Einrichtung umfassend zwei scheibenförmige Elemente mit dazwischenliegender IR-reflektierender Beschichtung ausgebildet ist. Als Anzeigevorrichtungen kommen insbesondere Flüssigkristallanzeigevorrichtungen aber auch OLED-Anzeigevorrichtungen oder LED-Anzeigevorrichtungen in Betracht.

Die Einrichtung für ein Anzeigeelement kann auch aus mindestens einem ersten scheibenförmigen Element und zumindest einem Polfilter besteht. Hierbei wird der Polfilter derart aufgebracht, dass das emittierte, polarisierte Licht einer Anzeigevorrichtung durch die Einrichtung nur wenig gedämpft wird. Dies wird erfindungsgemäß erreicht, indem die Durchlassrichtung des Polfilters der Einrichtung derart ausgerichtet wird, dass der Polfilter einen größtmöglichen Anteil des von der Anzeigevorrichtung emmittierten Lichts durchläßt. Dadurch wird das Nutzsignal der Anzeigevorrichtung zu einem hohen Anteil von größer 70%, vorzugsweise größer 80% durch die Einrichtung transmittiert, aber gleichzeitig wird das Sonnenlicht mit der Schwingengsebene orthogonal zu der Durchlaßrichtung des Polfilters gedämpft. Für eine gute Lesbarkeit der Anzeige eines Displays sollte die Transmission des emittierten Lichtes der Anzeigevorrichtung durch die Einrichtung mehr als 50%, vorzugsweise mehr als 70% betragen.

Zwischen der Einrichtung und der Anzeigevorrichtung wird ein Zwischenraum ausgebildet, der mit einem gasförmigen Medium gefüllt ist. Das gasförmige Medium kann Luft oder auch Stickstoff oder ein Edelgas wie Helium oder Argon sein. Der Abstand zwischen der erfindungsgemäßen Einrichtung und der Anzeigevorrichtung, welcher den Zwischenraum bildet, liegt im Bereich von 1 bis 500 mm, vorzugsweise 5 bis 100 mm.

Ein derartiger Aufbau ermöglicht es, dass die polarisierte sichtbare Strahlung, hier definiert als der Spektralbereich von 380 nm bis 780 nm Wellenlänge, von der Anzeigevorrichtung mit hoher Transmission von größer 70%, vorzugsweise größer 80%, durch die Einrichtung zu dem Betrachter gelangt, während der Anteil des unpolarisierten Sonnenlichts im sichtbaren Wellenlängenbereich der Strahlung nur zu etwa 50% auf die Anzeigevorrichtung gelangt.

Zusätzlich können in diesem Aufbau natürlich sämtliche oben beschriebenen Lösungen zur Verringerung der Transmission im Infrarotanteil der Sonnenstrahlung, im Infrarotwellenlängenbereich 780 nm bis 2500 nm, eingesetzt werden, um auch diesen Spektralanteil zu unterdrücken. Insbesondere können die gemäß dem ersten Aspekt der Erfindung beschriebenen Maßnahmen zur Verringerung der Transmission des Infrarotanteiles des Sonnenlichts durch die Einrichtung hindurch zur Anzeigevorrichtung hin eingesetzt werden.

Anzeigevorrichtungen werden auch als LC-Displays, Flüssigkristallbildschirme, Flüssigkristallanzeigen oder TFT-Bildschirme bezeichnet, bei denen das Licht mit einer Hintergrundbeleuchtung und einem Polarisationsfilter erzeugt wird und durch Drehung der Polarisationsrichtung durch Flüssigkristallelemente in Verbindung mit einem weiteren vorderseitigen Polarisationsfilter in eine Intensitätsänderung umgewandelt wird. Es können durch die beschriebene Ausführung aber auch alle anderen Anzeigesysteme verbessert werden, die polarisiertes Licht emittieren.

Die Anzeigevorrichtung kann so modifiziert werden, dass der Polfilter der Einrichtung gleichzeitig als vorderer Filter der Anzeigevorrichtung dienen kann. Auch in diesem Fall ist ein Abstand zwischen der Einrichtung und der Anzeigevorrichtung, speziell des Bereiches mit den Flüssigkristallen notwendig, um eine Aufheizung der Flüssigkristalle in der Anzeigevorrichtung zu verringern.

Ein Polfilter ist ein Polarisationsfilter oder Polarisator, der nur bestimmt ausgerichtetes Licht bzw. Lichtwellen durchlässt. Polfilter können durch eine Anzahl von verschiedenen Technologien realisiert werden. Die bekannteste Technologie arbeitet mit der Streckung von Folien, die Schichten aus Polyvinylalkohol aufweisen und in welche geeignete Teilchen wie z.B. dichroitische Farbstoffe, sehr feine Kohlenstofffäden oder eindiffundiertes Jod eingearbeitet sind. Durch das plastische Dehnen der Folie in eine Richtung werden die Moleküle längs der Ziehrichtung parallel ausgerichtet. Diese Moleküle absorbieren nach dem Ausrichten durchtretendes Licht stark anisotrop. Während unpolarisertes Licht, welches einen Polfilter passiert in einer Schwingungsebene nahezu nicht absorbiert wird, wird insbesondere die dazu senkrecht stehende orthogonale Schwingungsebene des Lichts fast vollständig absorbiert. Dem Fachmann ist bekannt, dass für die Anwendung in der erfindungsgemäßen Einrichtung aber alle erhältlichen Polfilter eingesetzt werden können, sofern Sie mindestens im sichtbaren Bereich der Sonnenstrahlung eine deutliche Polarisationswirkung in Transmission aufweisen. Bei Polfiltern, die darüber hinausgehend auch den Infrarotanteil des Lichts beeinflussen, wird die positive Wirkung nochmals verstärkt. Polarisatoren werden von vielen Firmen angeboten. Als Beispiel wird hier die Firma ITOS aus Mainz genannt, die Polfilter anbietet und auch technische Informationen zur Wirkungsweise der Polarisatoren im Internet anbietet.

Nähert man die von der Sonne abgegebene Strahlung, also das Spektrum des Sonnenlichts, durch einen Planck'schen Strahler mit einer Temperatur T_{STRAHLER} = 5762 K an, so kann man ableiten, dass bei Vernachlässigung des UV-Anteils mit Wellenlängen < 380 nm ungefähr 55 % der Intensität des Sonnenlichtes im sichtbaren Wellenlängenbereich von 380 nm bis 780 nm liegt und ungefähr 45 % im IR-Wellenlängenbereich von 780 nm bis 2500 nm. Beim Einsatz des hier beschriebenen Polarisators können von dem sichtbaren Teil des Spektrums (also ca. 55% der spektralen Intensität) die Hälfte der Strahlung im Polarisator absorbiert werden (nämlich im Wesentlichen die orthogonale Strahlung zur Ausrichtung des Polfilters) und tragen nicht mehr zur Aufheizung der Anzeigevorrichtung bei. Dieser Anteil beträgt damit ca. 27 % der Energie, der vermieden werden kann, das heißt die Hälfte der oben angeführten spektralen Intensität von 55%.

Die beschriebenen Polfilter werden für die Displayindustrie in großen Stückzahlen hergestellt. Dabei wird üblicherweise der Polfilter mit einer selbstklebenden Schicht versehen, um direkt auf die Frontscheibe der Anzeigevorrichtung befestigt zu werden. Die Vorderseite des Polarisators kann optional noch mit einer Antireflexschicht versehen werden, der störende Reflexionen an der Vorderseite minimiert und zur Kontrasterhöhung in heller Umgebung beiträgt.

Die Einrichtung kann als Vorsatz- und Schutzscheibe für ein Display auf verschiedene Weise realisiert werden.

In der einfachsten Form wird der oben beschriebene Polfilter auf ein erstes scheibenförmiges Element, vorzugsweise auf eine feste Glasscheibe befestigt und bildet auf diese Weise einen einfachen Verbund. Soll solch ein Verbund als Vorsatz- oder als Schutzscheibe für eine Anzeigevorrichtung eingesetzt werden, so wird der oben beschriebene Polfilter derart auf ein erstes scheibenförmiges Element befestigt, dass die Polarisationsrichtung für hohe Transmission parallel zu der Polarisationsrichtung des vorderseitigen Polarisators im Anzeigeelement liegt.

Der oben beschriebene Polfilter kann jedoch auch zwischen ein erstes scheibenförmiges Element und ein zweites scheibenförmiges Element laminiert werden, so dass ein fester Verbund entsteht, der eine erhöhte mechanische Festigkeit aufweist und beispielsweise als Verbundssicherheitsglas zugelassen werden kann.
Als festes bzw. flüssiges Füllmaterial, welches zwischen die beiden scheibenförmigen Elementen eingebracht wird, werden bevorzugt Polymermaterialien, ausgehärtete anorganische Materialien, beispielsweise Gießharz oder Folie, wie beispielsweise PVB (Polyvinylbutyral) -Folien, EVA (Ethylenvinylacetat)-Folien, PA (Polyacrylat) -Folien, PMMA (Polymethylmethacrylat) -Folien oder PUR (Polyurethan) -Folien verwandt.

Mit den zuvor beschriebenen Polymermaterialien können zusätzlich zu dem erfindungsgemäßen Einbringen eines Polfilters auch IR-Strahlung reflektierende Beschichtungen oder IR reflektierende Folien in den Verbund eingebracht werden, beispielsweise auf Folie aufgebrachte weitere low-E-Schichten, wie gemäß dem ersten Aspekt der Erfindung beschrieben. Damit kann die Schutzwirkung im Infrarotbereich noch zusätzlich verbessert werden. Low -E-Beschichtungen sind ein Beispiel für IR-reflektierende Beschichtungen, beispielsweise basierend auf transparenten Metall-, insbesondere Silberschichten, die eine sehr hohe Reflektivität im Bereich der IR-Strahlung von 780 nm bis 2500 nm aufweisen.

Zur Herstellung des Verbundes beispielsweise mittels eines Polymermaterials wie einer PVB-Folie, EVA-Folie, PA-Folie, PMMA-Folie oder PUR-Folie einer wird das Polymermaterial bzw. die Folie durch Druck verflüssigt oder erweicht und mit dem ersten scheibenförmigen Element und dem zweiten scheibenförmigen Element verklebt, um den Verbund zu ergeben.

Um insbesondere bei Verwendung der Einrichtung im Anzeigebereich den Kontrast und damit die Anzeigequalität für eine Anzeigevorrichtung zu erhöhen, ist es in einer weiteren Ausführungsform der Erfindung vorgesehen, dass die erste und/oder die letzte Oberfläche des Verbunds mit einer Entspiegelungs- oder Antireflexbeschichtung beschichtet ist.

Durch das Beschichten wenigstens einer Oberfläche des Verbunds mit einer Entspiegelungsbeschichtung bzw. Antireflexbeschichtung wird insbesondere die Reflexion im sichtbaren Wellenlängenbereich von 350 nm bis 780 nm einer Einrichtung deutlich vermindert und so der Kontrast gegenüber Einrichtungen ohne Entspiegelungsbeschichtung deutlich erhöht. Dieser Kontrast bezieht sich auf das Verhältnis des vom Display emittierten Lichtes in Bezug auf die von der Vorsatzscheibe reflektierte Strahlung des Umgebungslichtes. Bevorzugt wird der Reflexionsgrad Rᵥᵢₛ durch die Entspiegelungsbeschichtung um Faktor 4 bis 50 gegenüber einem nicht mit einer Entspiegelungsbeschichtung versehenen scheibenförmigen Element verringert. Beträgt der Reflexionsgrad Rᵥᵢₛ des scheibenförmigen Elementes ohne Entspiegelungsbeschichtung beispielsweise 8%, so kann durch die Entspiegelungsbeschichtung der Reflexionsgrad Rᵥᵢₛ auf 0,1% bis 6%, bevorzugt auf 0,2% bis 4% reduziert werden. Bei dem zuvor genannten Reflexionsgrad Rᵥᵢₛ handelt es sich um einen Reflexionsgrad bei Normlicht D65 (künstlichem Tageslicht), gefaltet mit der Augenempfindlichkeit. Obwohl die Reflexion für einzelne Wellenlängen größer als beispielsweise 2% sein kann, kann sich für das Normlicht D65 ein Wert Rᵥᵢₛ von 1% oder geringer ergeben.

Durch die Verminderung der Reflexion an der Oberfläche des Verbundes bedingt durch die Antireflexbeschichtung bzw. Entspiegelungsbeschichtung sowie innerhalb des Verbundes durch eine low-E Schicht und gegebenenfalls Anpassungsschichten wird der Kontrast gegenüber einem nicht mit einer Entspiegelungsbeschichtung versehenen Element deutlich erhöht. Als Entspiegelungsbeschichtungen werden bevorzugt Interferenzschichtsysteme eingesetzt. Bei solchen Systemen wird an den Grenzflächen der Entspiegelungsbeschichtung Licht reflektiert. Die an den Grenzflächen reflektierten Wellen können sich durch Interferenz sogar völlig auslöschen, wenn Phasen- als auch Amplitudenbedingung erfüllt sind.

Derartige Entspiegelungsbeschichtungen sind beispielsweise in den Produkten AMIRAN, CONTURAN, oder MIROGARD der Firma Schott AG realisiert. Betreffend ein Interferenz-Schichtsystem für breitbandige Entspiegelung wird auch auf die EP-A-1248959 verwiesen, deren Offenbarungsgehalt vollumfänglich in die vorliegende Anmeldung mit aufgenommen wird.

Neben der Verminderung der Reflexion Rᵥᵢₛ im optisch sichtbaren Spektralbereich 380nm bis 780nm kann durch die Entspiegelungsbeschichtung auch eine Erhöhung der Transmission bevorzugt um bis zu 10% erreicht werden.

Die Entspiegelungs- oder Antireflexbeschichtung, kurz AR-Beschichtung, wird bevorzugt auf einer nach außen, d. h. zur Luft hin gerichteten Seite des ersten und/oder des zweiten scheibenförmigen Elementes vorgesehen. Als Entspiegelungs- beziehungsweise Antireflexbeschichtungen kommen Schichten, die nach unterschiedlichen Verfahren hergestellt sind, in Betracht. Derartige Schichten können nach einem Sol-Gel-Verfahren, nach Sputterverfahren, nach Ätzverfahren oder in einem CVD-Verfahren hergestellt werden. Auch ist es möglich, auf dem Polfilter direkt eine solche AR-Beschichtung abzuscheiden. Im Einzelnen kann die Entspiegelungsbeschichtung mit einem der zuvor beschriebenen Auftragsverfahren mit Flüssigtechnologie, Hochvakuumtechnologie, CVD-Verfahren oder Ätzverfahren aufgebracht werden.

Insbesondere bei einem Durchgang des Lichts durch die Einrichtung je nach Anordnung der Polarisationsrichtung des Polfilters wird eine Schwingungsebene des Lichtes im optischen Spektralbereiches zwischen 380 nm und 780 nm gegenüber der entsprechenden orthogonalen Schwingungsebene stark unterdrückt wird. Typischerweise erreichen technische Polarisatoren im optisch sichtbaren Wellenlängenbereich eine Unterdrückung des Lichts in einer Polarisationsrichtung von mehr als 1:1000; jedoch kann der beschriebene positive Effekt der Sonnenschutzwirkung bereits ab Unterdrückungsgraden von besser als 1:5 im optisch sichtbaren Spektralbereich erreicht werden. Die Transmission des Lichts im optischen Spektralbereich von 380 nm und 780 nm durch die Einrichtung liegt erfindungsgemäß in einem Verhältnis des Durchtritts durch die Einrichtung in paralleler zu orthogonaler Polarisationsrichtung des Polfilters, gemessen mit polarisiertem Licht, von mindestens 3 zu 1 bevorzugt 5 zu 1, besonders bevorzugt oberhalb 10 zu 1.

Bei Einsatz einer Entspiegelungsbeschichtung können hohe Kontraste, beispielsweise Kontraste, die im Bereich von 40 bis 80 liegen, erreicht werden, ohne Beschränkung hierauf.

Wird eine Einrichtung als Vorsatz- oder Schutzscheibe vor der Anzeigevorrichtung angeordnet, wird bevorzugt zwischen der Einrichtung und der Anzeigevorrichtung ein Abstand vorgesehen , der durch ein gasförmiges Medium gefüllt ist.

Insbesondere für die Anwendung im Außenbereich kann die Einrichtung mit einer Randversiegelung ausgeführt sein, was den weiteren Vorteil der Widerstandsfähigkeit gegen hohe Luftfeuchtigkeit hat. Besonders bevorzugt im Hinblick auf die Korrosionsbeständigkeit eines Polfilters ist es, wenn in einem Verbund der Rand des ersten scheibenförmigen Elementes und des zweiten scheibenförmigen Elementes ein Dichtmaterial umfasst. Ein mögliches Dichtmaterial, welches hierfür verwandt werden kann, ist beispielsweise Butylkautschuk, der sich durch geringe Gasdurchlässigkeit auszeichnet. Eine alternative Dichtungsmöglichkeit ist die Dichtung durch eine umlaufende Aluminiumfolie, die wiederum mit einem Kunststoff mit geringer Gasdurchlässigkeit verklebt wird.

Der Rand des ersten und/oder zweiten scheibenförmigen Elementes sollte so ausgestaltet sein, dass der aufgebrachte Polfilter und gegebenenfalls auch zusätzlich aufgebrachte low-E Schichten nicht von der Seite des Verbundes her korrodieren. Als wirksames Mittel kann beispielsweise das Randentschichten eingesetzt werden, bei dem die low-E Schicht und auch der Polfilter nicht bis zum Rand durchgeht und so das Laminat am Rand direkt zwischen oberem und unterem Glas versiegelt werden kann.

Bevorzugt sind wenigstens 5 mm der Scheibe als Rand ausgebildet, in denen der Polfilter und gegebenenfalls die IR-reflektierende Beschichtung unterbrochen ist bzw. der keine IR-reflektierende Beschichtung und keinen Polfilter aufweist. Die Maximalgrenze des Randes wird so gewählt, dass der sichtbare Bereich für den Betrachter der Verbundglasscheibe nicht gestört wird.

Die Anzeigevorrichtung mit einem Display bzw. einer Displayvorrichtung kann eine Vorsatzscheibe umfassen, wobei die Vorsatzscheibe mindestens ein scheibenförmiges Element mit aufgebrachtem Polarisator umfasst und zwischen dem Display bzw. der Displayvorrichtung und der Vorsatzscheibe ein Zwischenraum angeordnet ist. Als Anzeigevorrichtungen kommen insbesondere Flüssigkristallanzeigevorrichtungen in Betracht, aber auch andere Anzeigevorrichtungen, in denen das vom Display emittierte Licht stark polarisiert abgestrahlt wird.

Nachfolgend soll die Erfindung anhand der Figuren beschrieben werden:
Es zeigen:
- Fig.1a-b: den prinzipiellen Aufbau einer erfindungsgemäßen Scheibe mit IR-reflektierender Beschichtung gemäß einem ersten Aspekt der Erfindung;
- Fig.2: eine Flüssigkristallanzeigevorrichtung mit einer erfindungsgemäßen Scheibe gemäß Fig. 1a-1b;
- Fig. 3a -b: die Reflexions- und Transmissionskurven der erfindungsgemäßen IR-Beschichtung in Abhängigkeit von der Wellenlänge.
- Fig. 4a-4d: den prinzipiellen Aufbau einer Einrichtung mit integriertem Polfilter.
- Fig. 5a-5b: den prinzipiellen Aufbau einer Einrichtung mit integriertem Polfilter und zusätzlicher IR-Schutzeinrichtung;
- Fig. 6: Aufbau einer LC-Anzeigevorrichtung für Anwendung mit direkter Sonneneinstrahlung mit einer erfindungsgemäßen Einrichtung gemäß einer der Figuren 4a-4d oder 5a-5b;
- Fig. 7: die Transmissionskurven eines erfindungsgemäßen zwischen zwei 4 mm Floatgläser laminierten Polfilters bei paralleler (gleicher) Ausrichtung des Polfilters mit dem Analysator und senkrecht dazu in Abhängigkeit von der Wellenlänge.
- Fig. 8: die Reflexionskurven eines erfindungsgemäßen zwischen zwei einseitig entspiegelte 4 mm Floatgläser laminierten Polfilters bei paralleler (gleicher) Ausrichtung des Polfilters mit dem Analysator und senkrecht dazu in Abhängigkeit von der Wellenlänge.

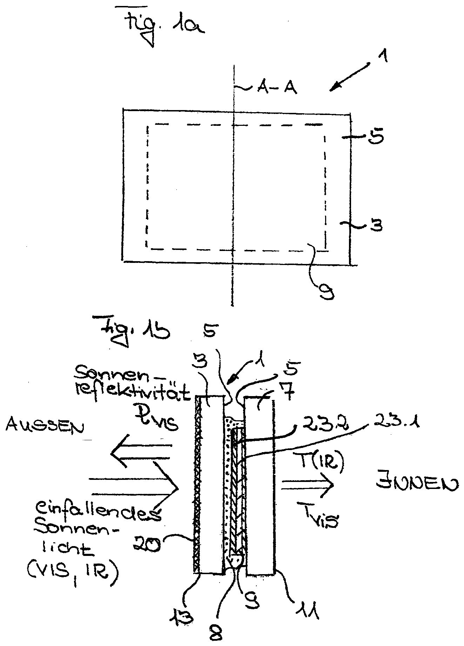

Figur 1a zeigt eine Draufsicht auf eine erfindungsgemäße Einrichtung 1 und Figur 1b einen Schnitt entlang der Linie A - A gemäß der Erfindung.

Die Draufsicht gemäß Figur 1a zeigt das erste scheibenförmige Element 3 gemäß einem ersten Aspekt der Erfindung. Das erste scheibenförmige Element 3 umfasst einen Rand 5, der nicht mit einer IR-reflektierenden Beschichtung 9 versehen ist. Der Aufbau des Systems bzw. der Einrichtung 1, die auch als Verbundglaselement bezeichnet wird, aus zwei scheibenförmigen Elementen 3, 7 ist deutlicher aus der Schnittansicht entlang der Linie A-A gemäß Figur 1b zu entnehmen. Wiederum bezeichnet 3 das erste scheibenförmige Element. Die IR-reflektierende Beschichtung ist zwischen das erste scheibenförmige Element 3 und das zweite scheibenförmige Element 7 eingebracht und mit der Bezugsziffer 9 bezeichnet. Die IR-reflektierende Beschichtung bildet zusammen mit den beiden scheibenförmigen Elementen einen Verbund bzw. eine Verbundscheibe. Um den Verbund auszubilden, wird in den Zwischenraum zwischen den beiden Scheiben 3 und 7 ein festes oder flüssiges Füllmaterial 8, insbesondere ein Polymermaterial oder ein verfestigte anorganische Substanz eingebracht. Im Gegensatz zu einem Isolierglas-Verbund bei dem zwei Scheiben durch einen Zwischenraum mit einem gasförmigen Medium voneinander getrennt angeordnet sind, liegen bei der erfindungsgemäßem Einrichtung die scheibenförmigen Elemente 3, 7 über das Füllmaterial 8 und die IR-Reflexionsbeschichtung 9 direkt aneinander an, ergebend ein Verbundglaselement. Wie aus der Schnittansicht gemäß Figur 1b ersichtlich ist, ist der Rand 5 sowohl des scheibenförmigen Elementes 3 wie des scheibenförmigen Elementes 7 nicht mit einem Füllmaterial 8 oder einer IR-reflektierenden Beschichtung 9 versehen. In den Randbereich kann eine Dichtmasse (nicht gezeigt) eingebracht werden, die verhindert, dass durch Diffusion entlang des Füllmaterials, bspw. einer Folie, Feuchtigkeit in den Zwischenraum zwischen dem ersten scheibenförmigen Element und dem zweiten scheibenförmigen Element eindringt und so die zwischen dem ersten und dem zweiten scheibenförmigen Element liegende IR-reflektierende Beschichtung 9, die bevorzugt eine low-E-Beschichtung ist, vor Korrosion geschützt wird. Angegeben sind auch die Transmission Tᵥᵢₛ bzw. T (IR) und die Reflexion Rᵥᵢₛ bzw. die IR-Sonnenreflektivität von auf die Aussenseite AUSSEN einfallendem Sonnenlicht umfassend sichtbares Licht (VIS) und IR-Strahlung für das Verbundglaselement bzw. die Einrichtung 1. Um im sichtbaren Wellenlängenbereich eine hohe Transmission Tᵥᵢₛ und eine niedrige Reflexion Rᵥᵢₛ, die bevorzugt Rᵥᵢₛ < 2 %, insbesondere < 1 % zu erreichen, können oxidische und/oder leitfähig oxidische Anpassungsschichten 23.1, 23.2 vorgesehen sein, die die Reflektivität Rᵥᵢₛ innerhalb der Einrichtung 1 bzw. des Verbundglaselementes minimieren. Derartige Schichten 23.1 werden bereits unterhalb der Low-E Schicht 9 eingesetzt, um die Silberschicht an das Glas des zweiten scheibenförmigen Elementes 7 anzupassen. Einen ähnlichen Schichtaufbau 23.2 kann man dann oberhalb der low-E Schicht 9 ebenfalls einsetzen, so dass beidseitig zur Low-E Schicht 9 näherungsweise symmetrische Schichtaufbauten entstehen. Diese Schichten setzen sich durch Diffusionssperrschichten zum Schutz des Silbers der low-E Schicht sowie Anpassschichten aus anderen Oxiden oder Nitriden zusammen, deren Brechzahlsprünge und Schichtdicken dann als Anpassschicht ausgelegt werden.

Die Ausbildung einer IR-reflektierenden Beschichtung, insbesondere einer low-E-Beschichtung auf der Basis von Silberschichten ist in Hans-Joachim Gläser, "Dünnfilmtechnologie auf Flachglas", S. 167-171, deren Offenbarungsgehalt vollumfänglich in die vorliegende Anmeldung mit aufgenommen wird, eingehend beschrieben. Während auch andere Metall wie Gold oder Aluminium als IR-reflektierende Beschichtungen möglich sind, ist Silber wegen seiner guten Farbwirkung bevorzugt.

Bei einer Verwendung der Einrichtung insbesondere im Außenbereich für Anzeigevorrichtungen ist es vorteilhaft, wenn zur Erhöhung des Kontrastes bei Einstrahlung von direktem Sonnenlicht die Außenseite AUSSEN, das heißt die zur Luft gerichtete Seite 13 der Einrichtung mit einer Entspiegelungsbeschichtung beziehungsweise einer Antireflexbeschichtung 20 versehen ist. Vorliegend ist nur die Seite 13 des ersten scheibenförmigen Elementes mit einer Entspiegelungs- bzw. Antireflexbeschichtung 20 versehen. Selbstverständlich könnte zusätzlich auch die Außenseite INNEN, d. h. die Seite 11 des zweiten scheibenförmigen Elementes 7 mit einer Entspiegelungsbeschichtung versehen sein.

Als Entspiegelungsbeschichtung oder Antireflexbeschichtung, kommen bspw. mit Sol-Gel-Verfahren oder Sputterverfahren hergestellte Entspiegelungsbeschichtungen zum Einsatz. Nachfolgend sollen zwei Ausführungsbeispiele für derartige Entspiegelungs- beziehungsweise Antireflexbeschichtungen angegeben werden:

### Beispiel 1:

Einseitige Antireflexbeschichtung, hergestellt nach dem Sol-Gel-Verfahren:
Die Beschichtung besteht aus jeweils drei Einzelschichten und besitzt die Struktur: Substrat + M + T + S. Die mit T gekennzeichnete Einzelschicht enthält Titandioxid TiO₂, die mit S gekennzeichnete Einzelschicht enthält Siliziumdioxid SiO₂ und die mit M gekennzeichnete Einzelschicht wird jeweils aus S- und T-Mischlösungen gezogen. Das Floatglassubstrat wird vor der Beschichtung sorgfältig gereinigt. Die Tauchlösungen werden jeweils in auf 28° C klimatisierten Räumen bei einer Luftfeuchtigkeit von 5 - 10 g/m3 aufgetragen, die Ziehgeschwindigkeiten betragen für die Einzelschichten M/T/S ca. 275/330/288 mm/min. Auf das Ziehen einer jeden Gel-Schicht folgt ein Ausheizprozess an Luft. Die Ausheiztemperaturen und Ausheizzeiten betragen 180° C/20min nach Herstellung der ersten Gel-Schicht sowie 440° C/60min nach der Herstellung der zweiten und dritten Gel-Schicht. Im Falle der T-Schichten setzt sich die Tauchlösung (pro Liter) zusammen aus: 68 ml Titan-n-Butylat, 918 ml Ethanol (abs), 5 ml Acetylaceton und 9 ml Ethyl-Butylacetat. Die Tauchlösung zur Herstellung der S-Schicht enthält: 125 ml Kieselsäure Methylester, 400 ml Ethanol (abs), 75 ml H2O (dest.), 7,5 ml Essigsäure und wird nach einer Ruhezeit von ca. 12 Stunden mit 393 ml Ethanol (abs) verdünnt. Die Beschichtungslösungen zur Herstellung der Oxide mit mittlerem Brechungsindex werden durch Mischung der S + T-Lösungen präparierte. Die mit M gekennzeichnete Schicht wird aus einer Tauchlösung mit einem Siliziumdioxid-Gehalt von 5,5 g/l und einem Titandioxid-Gehalt von 2,8 g/l gezogen. Der angewandte nasschemische Sol-Gel-Prozess erlaubt als Tauchverfahren die wirtschaftliche Beschichtung großer Flächen, wobei zwei Scheiben vor dem Tauchvorgang miteinander verklebt werden, damit die notwendige einseitige Entspiegelungswirkung erzielt wird. Der Kleber ist so gewählt, dass er bei 440° C innerhalb der oben beschriebenen Einbrennzeit verbrennt, so dass die Scheiben den Prozess getrennt verlassen.

### Beispiel 2:

Einseitige Antireflexbeschichtung, hergestellt nach dem Sputterverfahren:
Die Beschichtung wird in einer Durchlaufanlage mit einem MF Sputterprozess durch Magnetronsputtern beschichtet, wobei das Substrat auf einem sogenannten Carrier positioniert und auf diesem durch die Sputteranlage transportiert wird. Innerhalb der Beschichtungsanlage wird das Substrat zunächst zur "Entwässerung" der Oberflächen auf ca. 150° C vorerwärmt. Anschließend wird ein Antireflex-System (als Beispiel bestehend aus vier Schichten) wie folgt hergestellt:
A) Sputtern einer hochbrechenden Schicht mit einem Vorschub von 1,7 m/min, wobei der Carrier vor der Sputterquelle pendelt und währenddessen eine Schicht von 30 nm Dicke abgeschieden wird. Die Schichtherstellung erfolgt durch Zugabe von Argon und Reaktivgas unter Regelung des Reaktivgases auf eine Plasmaimpedanz. Der Prozessdruck wird insbesondere durch die Menge an Argon bestimmt, welcher zu typischen Prozessdrücken im Bereich zwischen 1*E-3 und 1*E-2 mbar führt. Die Abscheidung im Plasma erfolgt über eine Pulsung.
B) Sputtern einer niedrigbrechenden Schicht mit einem Vorschub von 2,14 m/min. Hierbei wird eine Schicht der Dicke 30,5 nm hergestellt. Die Schichtherstellung erfolgt entsprechend der Abscheidung unter Schicht 1.
C) Sputtern einer hochbrechenden Schicht entsprechend Schicht 1. Hier wird bei einem Vorschub von 0,9 m/min eine Schicht der Dicke 54 nm hergestellt.
D) Sputtern einer niedrigbrechenden Schicht gemäß Schicht 2. Bei einem Vorschub von 0,63 m/min wird eine Schicht der Dicke 103 nm hergestellt. Anschließend wird das beschichtete Substrat mit dem Carrier über eine Transferkammer ausgeschleust.

Mit den Entspiegelungs- beziehungsweise Antireflexbeschichtungen, wie oben beschrieben, kann ein Kontrast, der als Tᵥᵢₛ/Rᵥᵢₛ definiert ist, im Bereich 10 bis 60, bevorzugt 20 bis 60, insbesondere 40 bis 50 bei Normlicht erreicht werden, wobei bei nicht entspiegelten Scheiben die Kontrastwerte geringer als 7 sind. Rᵥᵢₛ bezeichnet den Reflexionsgrad einer Schicht bei Normlicht D65, Tᵥᵢₛ den Transmissionsgrad. d. h. den Reflexionsgrad bzw. Transmissionsgrad im sichtbaren Wellenlängenbereich von 350 bis 780 nm.

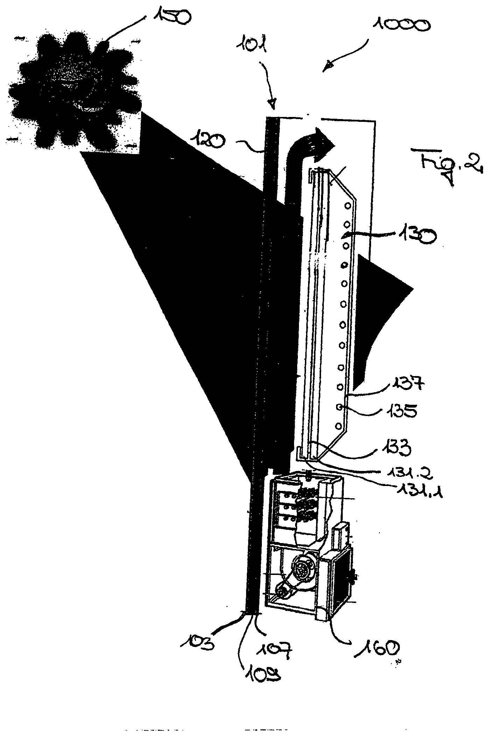

In Figur 2 ist eine Anzeigevorrichtung 1000 mit einer erfindungsgemäßen Einrichtung 101 gemäß einem ersten Aspekt der Erfindung als Vorsatzscheibe für ein Display, hier eine Flüssigkristallanzeige 130 dargestellt. Wie in Figur 1a - 1b gezeigt, ist die erfindungsgemäße Einrichtung 101 mit einem ersten scheibenförmigen Element 103 und einem zweiten scheibenförmigen Element 107 sowie einer dazwischenliegenden IR-reflektierenden Schicht 109 und einer auf die Außenseite der ersten Scheibe aufgebrachten Antireflex- beziehungsweise Entspiegelungsbeschichtung 120 versehen. Die hinter der als Vorsatzscheibe ausgebildeten Einrichtung 101 liegende Flüssigkristallanzeige 130 umfasst ohne Beschränkung hierauf einen zwischen zwei Scheiben 131.1, 131.2 eingebrachten Flüssigkristall 133 mit Leuchtmitteln 135. Die gesamte Flüssigkristallanzeige 130 ist in ein Gehäuse 137. integriert. Die Flüssigkristallanzeige 130 ist nur eine mögliche Anzeige, andere mögliche Anzeigen umfassen ansteuerbare LED oder auch OLED. Obwohl eine Flüssigkristallanzeige angegeben ist, ist die Erfindung hierauf nicht beschränkt.

Die erfindungsgemäße Einrichtung 101 als Vorsatzscheibe verhindert weitgehend, dass Licht der Sonne 150 den Zwischenraum zwischen der Vorsatzscheibe und der Flüssigkristallanzeige 130 aufheizt. Nichts desto trotz ist es aber aufgrund der eigenen Wärmeentwicklung der Flüssigkristallanzeige 130 notwendig, diese aktiv zu kühlen mit einer Kühleinrichtung 160.

Die Kühleinrichtung 160 kann jedoch wesentlich kleiner dimensioniert werden als im Stand der Technik, da ein Wärmeeintrag aufgrund der Sonnenbestrahlung zwischen die Scheibe und die Flüssigkristallanzeige nicht stattfindet.

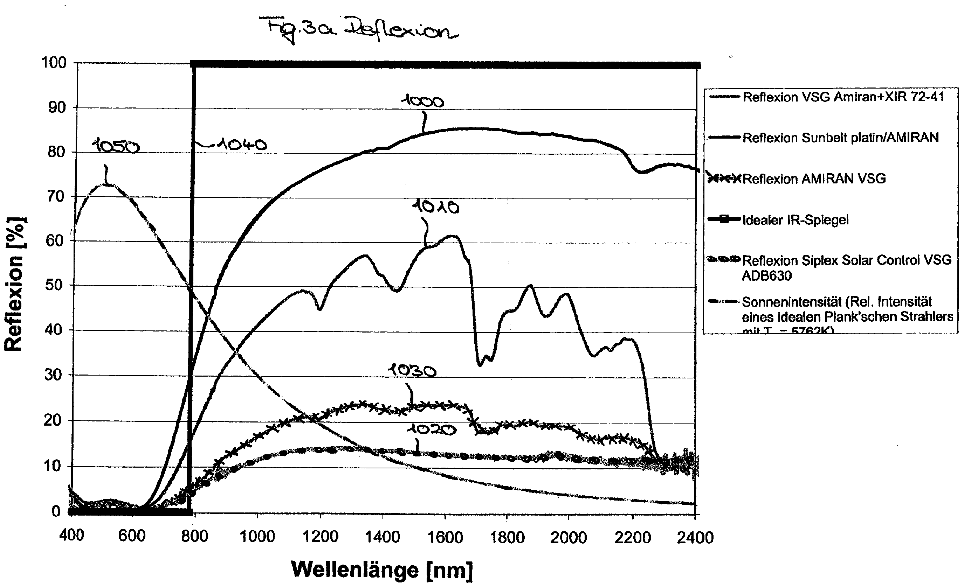

Die Figur 3a zeigt die Reflektivität für Einrichtungen mit unterschiedlichen Schichtsystemen über einer Wellenlänge von 400 nm bis 2400 nm.

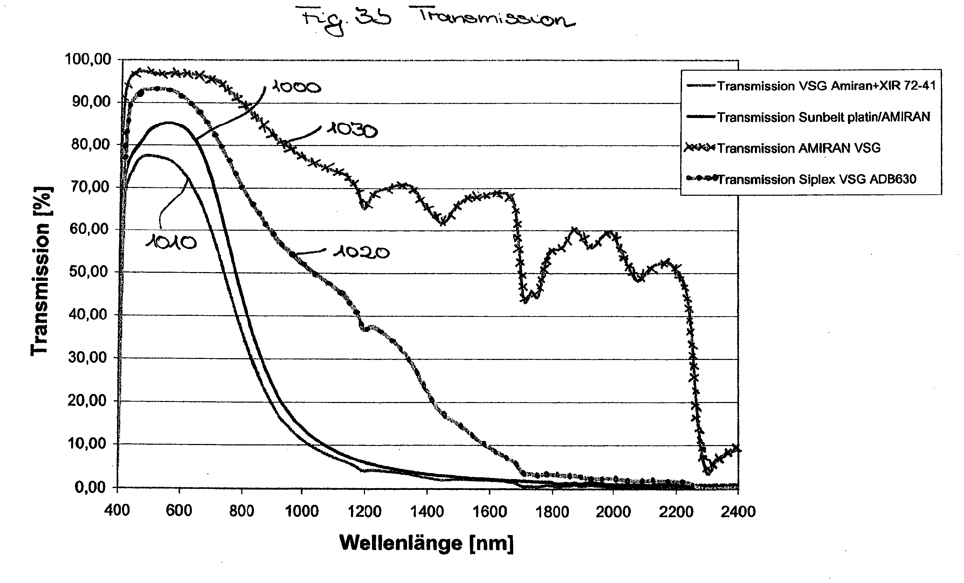

In Figur 3b sind die zugehörigen Transmissionswerte für die gleichen Schichtsysteme mit gleicher Bezifferung dargestellt.

Es bezeichnet die Bezugsziffer 1000 ein System aus einer silberbasierten Beschichtung als IR-Reflexionsschicht der Firma ARCON (Feuchtwangen, Bucha) basierend auf dem modifizierten Schichtdesign der Schicht "Sunbelt Platin" mit einer Entspiegelungsbeschichtung, die Bezugsziffer 1010 die Reflexions- und Absorption eines Systems mit einer XIR-Folie der Fa. Southwall und einer Entspiegelungsbeschichtung sowie die Bezugsziffer 1020 ein System gemäß dem Stand der Technik mit einer Entspiegelung und einer IR-reflektierenden Folie Siplex Solar Control, sowie als Vergleich eine Antireflexbeschichtung mit Bezugsziffer 1030 ohne IR-reflektierende Beschichtung (CONTURAN der Firma SCHOTT). Zusätzlich sind in der Figur 3a noch die Kurve eines ideal reflektierenden IR-Spiegels 1040 abgebildet, der alle Wellenlängen oberhalb von 780 nm, der Grenze des sichtbaren Lichtes, reflektiert und die idealisierte Intensitätsverteilung des Sonnenspektrums 1050 gezeigt, das als Planck'scher Strahler mit einer Oberflächentemperatur von 5762K angenähert ist. Hierbei wurden Absorptionsbanden zur Vereinfachung im Spektrum vernachlässigt. Bei allen Einrichtungen handelt es sich um Verbundsystem mit erstem und zweitem scheibenförmigen Element und den entsprechenden Beschichtungen. Die in Tabelle 1 angegebenen Daten für die Reflexion Rᵥᵢₛ und Transmission Tᵥᵢₛ im sichtbaren Wellenlängenbereich sowie die IR-Transmission T (IR) und die IR-Sonnenreflektivität beziehen sich auf die Gesamtsysteme, d. h. das Verbundglaselement bestehend aus zwei scheibenförmigen Elementen mit den entsprechenden Beschichtungen. Diesbezüglich wird auf Figur 1b verwiesen.

In Tabelle 1 sind die Daten für die unterschiedlichen Schichtsysteme, die in den Figuren 3a und 3b gezeigt wurden angegeben.

| System (Scheibe 1/IR-Schicht/Scheibe2) | Rᵥᵢₛ (D65) | Tᵥᵢₛ (D65) | T(IR) 780 - 2000 nm | IR Sonnenreflexion |
|---|---|---|---|---|
| CONTURAN Entspiegelungsbeschichtung | 1% | 96% | 67% | 17% |
| IR-reflektierende Folie Siplex Solar + Entspiegelungsbeschichtung | 1,5% | 92% | 28% | 11% |
| XIR-Folie +Entspiegelungsschicht | 1,5% | 77% | 8% | 40% |
| Silberbasierte IR-Reflexionsschicht/Entspiegelungsbeschicht ung | 1,4% | 84% | 9% | 68% |

Wie aus Tabelle 1 hervorgeht, tritt der höchste Kontrast, nämlich von Tᵥᵢₛ/Rᵥᵢₛ= 60, mit der höchsten Transmission Tᵥᵢₛ, nämlich von 84%, bei der höchsten IR-Sonnenreflexion von 68% und niedriger IR-Transmission T(IR) von nur 9% für die erfindungsgemäße Einrichtung aus zwei Scheiben mit dazwischenliegenden silberbasierte IR-Reflexionssystem in Kombination mit einer Entspiegelungsbeschichtung auf die ersten und/oder zweiten Scheiben des Verbundsystems auf.

Wie aus Tabelle 1 hervorgeht, weist auch die Verbundscheibe mit XIR-Folie eine niedrige Transmission auf, jedoch beträgt die IR-Sonnenreflektivität nur 40 % und nicht 68 % wie im Fall der metall- bzw. silberbasierten IR-Reflexionsschicht. In der XIR-Folie wird also ein hoher Anteil an IR-Strahlung des natürlichen Sonnenlichtes bzw. Sonnenspektrums absorbiert bzw. eingetragen, wodurch sich ein derartiges System gegenüber einem System mit einer metallbasierten IR-Reflexionsschicht unzulässig erwärmt.

Mit Hilfe eines genäherten Sonnenspektrum, das durch einen Planck'schen Strahler mit T = 5762K gut dargestellt werden kann, kann man ableiten, wie viel Energie des Sonnenlichtes in den IR-Bereich oberhalb 780 nm bis 2500nm entfällt: so liegt ca. 45% der Sonnenenergie in diesem Bereich und ca. 55% liegen im Bereich 350nm - 780nm. Hierbei wurden UV-Anteile unterhalb 350nm vernachlässigt, da die Transmission hier durch das feste bzw. flüssige Füllmaterial bereits deutlich herabgesetzt ist. Wellenlängen oberhalb von 2500nm wurden ebenfalls nicht berücksichtigt, da Glas oberhalb 2500nm selbst stark absorbiert.

In Figur 3b ist neben dem genäherten Sonnenspektrum 1050 auch ein idealer IR-Spiegel 1040 dargestellt, der unterhalb 780nm im sichtbaren Bereich keine Reflexion aufweist und oberhalb 780nm 100% Reflektivität zeigt. Dieses Idealdesign des Spiegels ermöglicht eine Reflexion von ungefähr 45% der relevanten Sonnenstrahlung, ohne den sichtbaren Bereich zu beeinträchtigen. Die Zahlenwerte der IR-Reflexion werden in dieser Anmeldung relativ zu diesem idealen IR-Spiegel angegeben.

Wenn man die spektralen Reflektivitäten der Beispiele aus Figur 3a mit der relativen Intensität des genäherten Sonnenspektrums faltet, das als Planck'scher Strahler mit T=5762 K genähert ist, so kann man ermitteln, wieviel Strahlung der Sonne im IR-Bereich oberhalb 780nm reflektiert wird. Dieser Wert, bezogen auf die Reflektivität des idealisierten IR-Spiegels mit 100% Reflexion oberhalb 780nm, wird in dieser Anmeldung als IR-Sonnenreflektivität definiert.

Aus Tabelle 1 geht hervor, dass mittels der hier beschriebenen silberbasierten IR-Reflexionsschicht 30% der Energie des gesamten Sonnenspektrums reflektiert werden kann, was einer IR-Sonnenreflektivität von 68% gegenüber dem idealen Spiegel mit der Kurve 1040 entspricht, während mit einer XIR-Folie nur 18% möglich sind, was einer IR-Sonnenreflektivität von 40% gegenüber dem idealen Spiegel entspricht.

Einem Fachmann ist klar, dass in praktischen Ausführungen noch Teile des sichtbaren Spektrums der Kurven 1000,1100, 1040 und 1050 zur IR-Reflexion genutzt werden können, da das Auge an den Rändern des sichtbaren Bereiches hin immer unempfindlicher wirkt. Zum Nachweis der Wirksamkeit wurde die Vereinfachung mittels idealem Spiegel eingeführt.

Durch das erfindungsgemäße System einer Verbundscheibe mit IR-reflektierender Beschichtung, wie zuvor beschrieben, ist es erstmals möglich, einen hohen optischen Kontrast im sichtbaren Wellenlängenbereich insbesondere bei einer Außenanwendung im Anzeigebereich mit einer hohen IR-Reflektivität zu verbinden und so den Wärmeeintrag aufgrund von naher IR-Sonneneinstrahlung zu vermindern.. Ein weiterer Vorteil ist die einfache Herstellbarkeit, da Standard-Beschichtungsprozesse für silberbasierte Low-E Beschichtungen zur Herstellung der IR-Beschichtung eingesetzt werden können

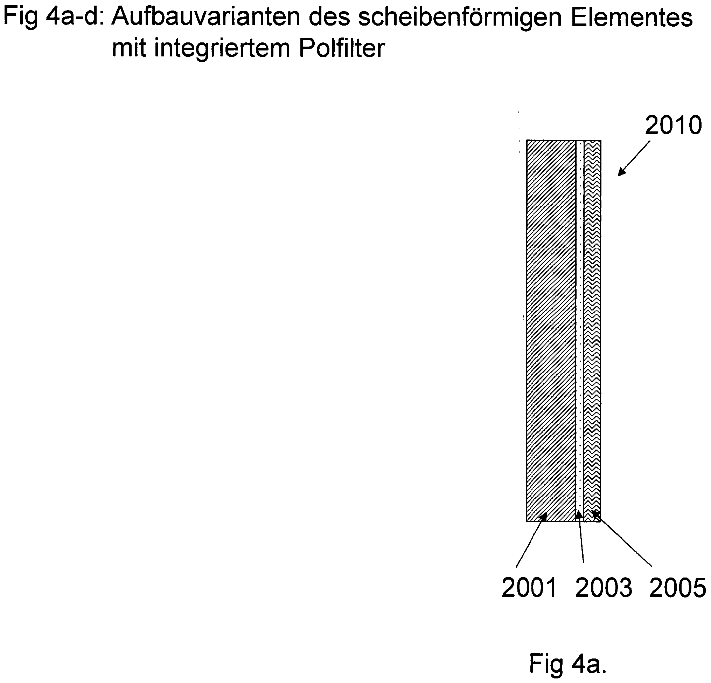

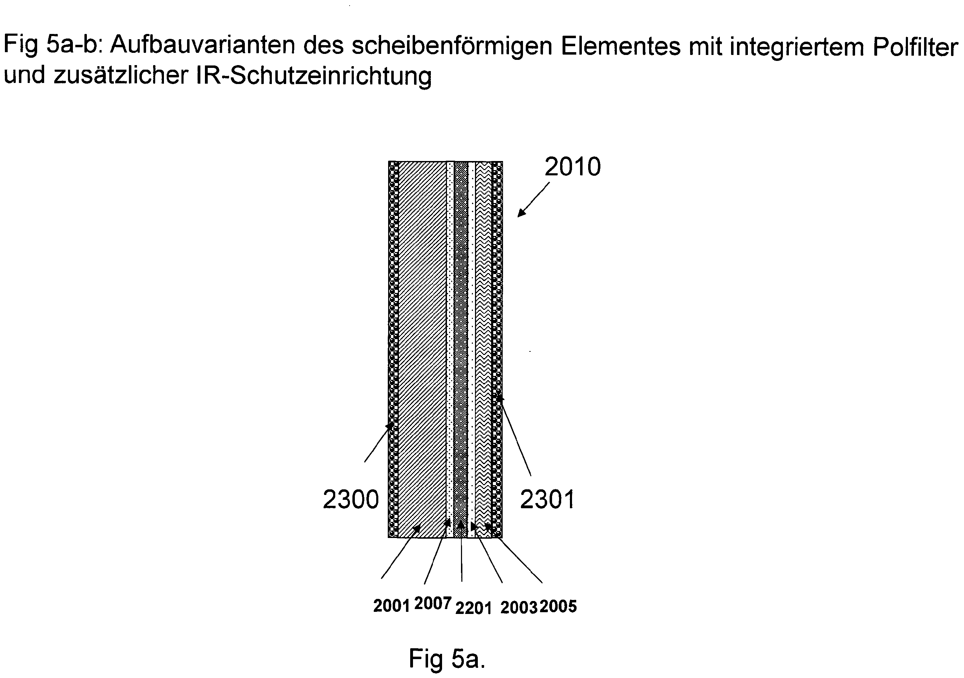

Figur 4a-4d sowie 5a-5b zeigen den Querschnitt durch eine ,Einrichtung mit Polarisationsfilter.

In Fig. 4a bezeichnet 2001 das erste scheibenförmige Element. In Fig. 4a wurde der Polarisationsfilter 2005 mittels einer Adhäsionsschicht 2003 direkt mit dem ersten scheibenförmige Element verbunden.

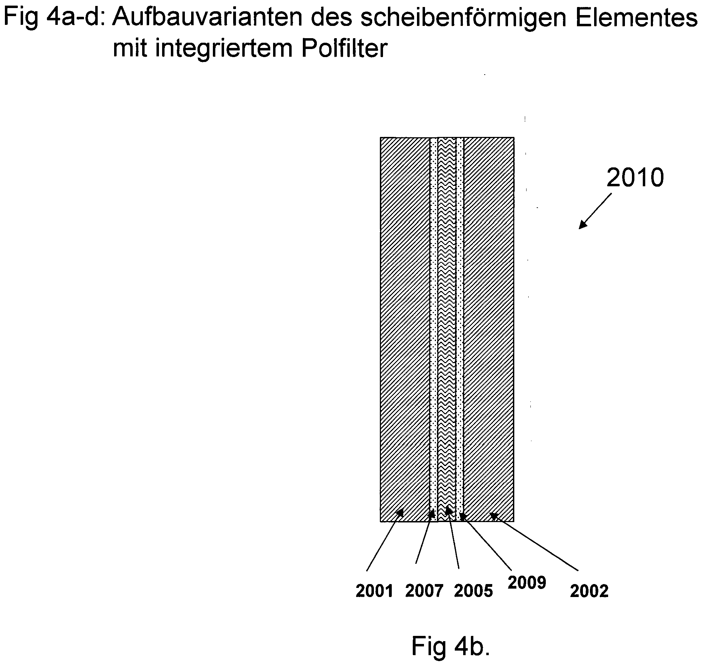

Figur 4b zeigt eine erweiterte Lösungsvariante, bei der der Polfilter 2005 mittels zwei Füllmaterialien 2007 und 2009 zwischen zwei scheibenförmige Elemente 2001 und 2002 eingebracht wurde. Der Polfilter 2005 bildet zusammen mit den beiden scheibenförmigen Elementen 2001 und 2002 einen Verbund bzw. eine Verbundscheibe. Um den Verbund auszubilden, wird in den Zwischenraum zwischen den beiden Scheiben 2001 und 2002 ein festes oder flüssiges Füllmaterial 2007 und 2009, insbesondere ein Polymermaterial oder eine verfestigte anorganische Substanz eingebracht. Im Gegensatz zu einem Isolierglas-Verbund bei dem zwei Scheiben durch einen Zwischenraum mit einem gasförmigen Medium voneinander getrennt angeordnet sind, liegen bei der erfindungsgemäßem Einrichtung die scheibenförmigen Elemente 2001 und 2002 über das Füllmaterial 2007 und 2009 und den Polfilter 2005 direkt aneinander an, ergebend ein Verbundglaselement.

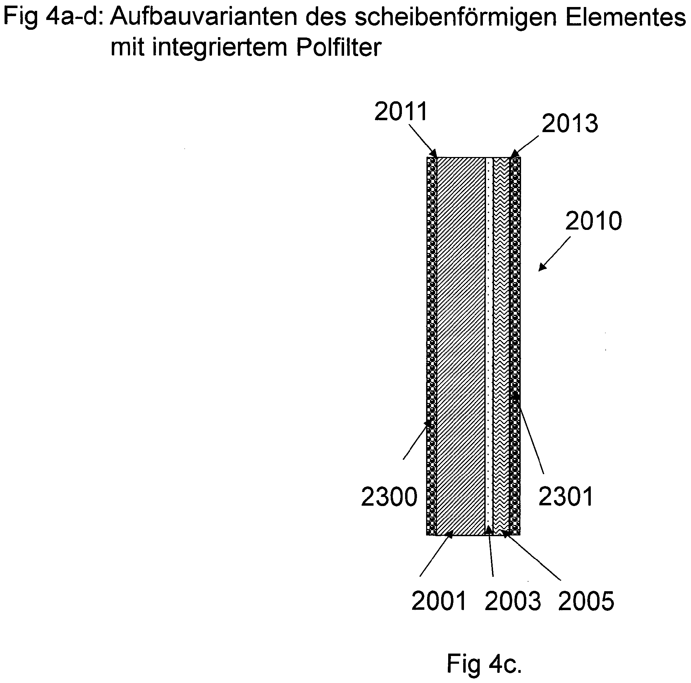

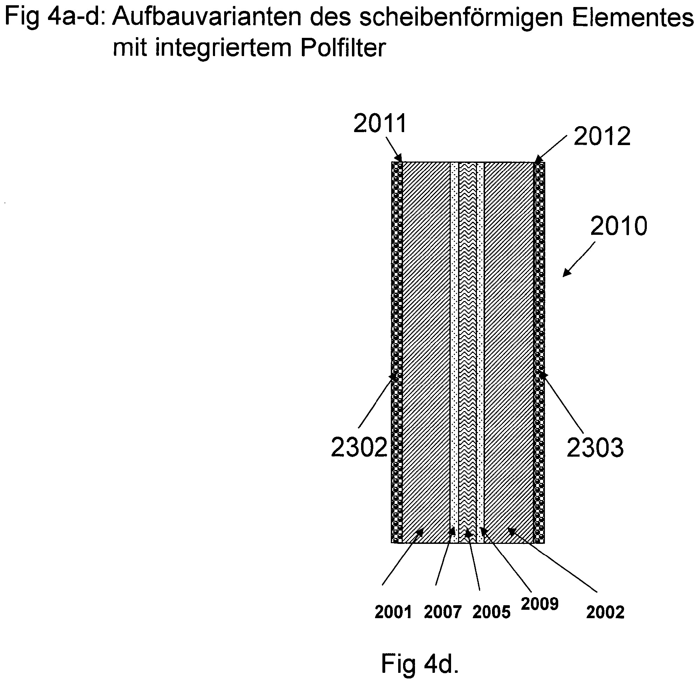

Um im sichtbaren Wellenlängenbereich eine hohe Transmission Tᵥᵢₛ von der Anzeigevorrichtung durch die Einrichtung 2010 zum Betrachter zu erreichen und um eine niedrige Reflexion Rᵥᵢₛ des auf die Einrichtung 2010 von einer oder beiden Seiten einfallenden Lichtes zu erreichen, die bevorzugt Rᵥᵢₛ < 2 %, insbesondere < 1 % beträgt, können wie in Figur 4c und 4d dargestellt oxidische und/oder leitfähige oxidische Anpassungsschichten 300, 301, 302, 303 vorgesehen sein, die die Reflektivität Rᵥᵢₛ innerhalb der Einrichtung bzw. des Verbundglaselementes 2010 minimieren.

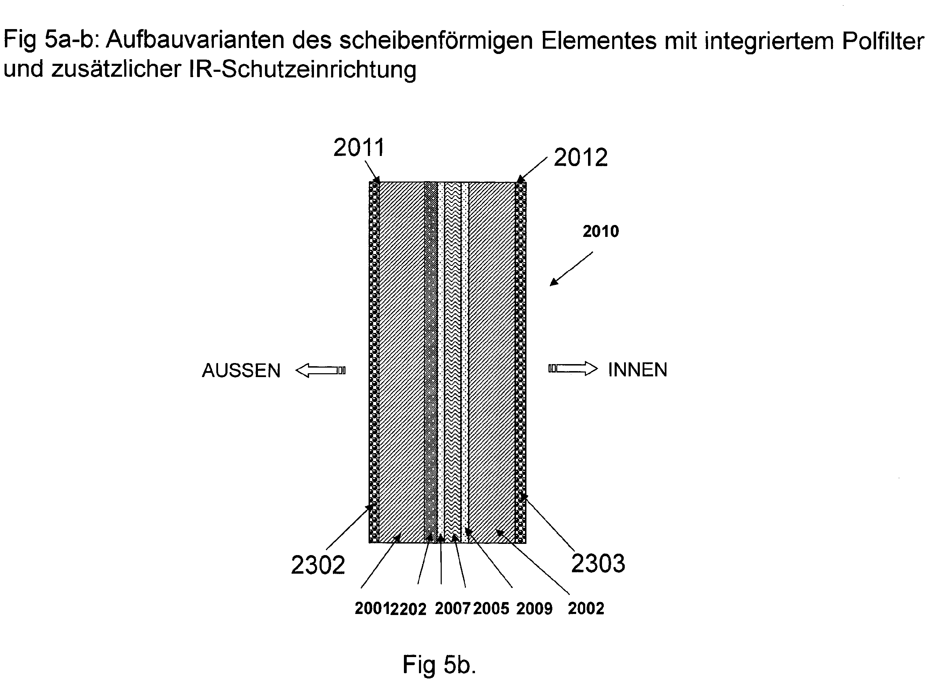

Figur 5a und 5b stellen die Kombination der in Figur 4 gezeigten Polfilter mit zusätzlichen IR reflektierenden Beschichtungen, wie z. B. in Figuren 1a bis 1b gezeigt, dar, die in den Aufbau eingebracht werden können. Figur 5a zeigt exemplarisch die Schicht 2201, die beispielsweise eine XIR Sonnenschutzfolie darstellen kann sowie in Figur 5b eine Schicht 2202, die beispielsweise durch eine low-E Schicht realisiert werden kann. Bei Einbringung einer low-E Schicht in das System gelten die gesamten Voraussetzungen, wie sie in der zuvor niedergelegten Beschreibung beispielsweise zu den Figuren 1a bis 3 dargelegt wurde.

Die Ausbildung einer IR-reflektierenden Beschichtung, insbesondere einer low-E Beschichtung auf der Basis von Silberschichten ist in Hans-Joachim Gläser, "Dünnfilmtechnologie auf Flachglas", S. 167-171, deren Offenbarungsgehalt vollumfänglich in die vorliegende Anmeldung mit aufgenommen wird, eingehend beschrieben. Während auch andere Metalle wie Gold oder Aluminium als IR-reflektierende Beschichtungen möglich sind, wird Silber wegen seiner guten Farbwirkung bevorzugt.

Bei einer Verwendung der erfindungsgemäßen Einrichtung insbesondere im Außenbereich für Anzeigevorrichtungen ist es vorteilhaft, wenn zur Erhöhung des Kontrastes bei Einstrahlung von direktem Sonnenlicht die Außenseite AUSSEN, das heißt die zur Luft gerichtete Seite 2011 der Einrichtung mit einer Entspiegelungsbeschichtung beziehungsweise einer Antireflexbeschichtung 2300, 2302 versehen ist. Selbstverständlich könnte auch die Innenseite INNEN, das heißt die der Anzeigevorrichtung zugewandte Seite 2012 der Einrichtung mit einer Entspiegelungsbeschichtung beziehungsweise einer Antireflexbeschichtung 2301, 2303 versehen sein. Für eine optimale Wirkung sollte jede der Grenzflächen zwischen scheibenförmigen Material 2001, 2002 bzw. Polfilter 2005 und Umgebungsluft bzw. Luft/Gasfüllung des Zwischenraums 2102 mit einer Antireflexbeschichtung versehen sein.

Als Entspiegelungsbeschichtung oder Antireflexbeschichtung, kommen bspw. mit Sol-Gel-Verfahren oder Sputterverfahren hergestellte Entspiegelungsbeschichtungen gemäß den zuvor beschriebenen Beispielen 1 und 2 zum Einsatz.

Mit den Entspiegelungs- beziehungsweise Antireflexbeschichtungen, wie in Beispielen 1 und 2 beschrieben, kann ein Kontrast, der als Tᵥᵢₛ/Rᵥᵢₛ definiert ist, im Bereich 10 bis 60, bevorzugt 20 bis 60, insbesondere 40 bis 50 bei Normlicht erreicht werden, wobei bei nicht entspiegelten Scheiben die Kontrastwerte geringer als 7 sind. Rᵥᵢₛ bezeichnet den Reflexionsgrad einer Schicht bei Normlicht D65, Tᵥᵢₛ den Transmissionsgrad. d. h. den Reflexionsgrad bzw. Transmissionsgrad im sichtbaren Wellenlängenbereich von 380 bis 780 nm.

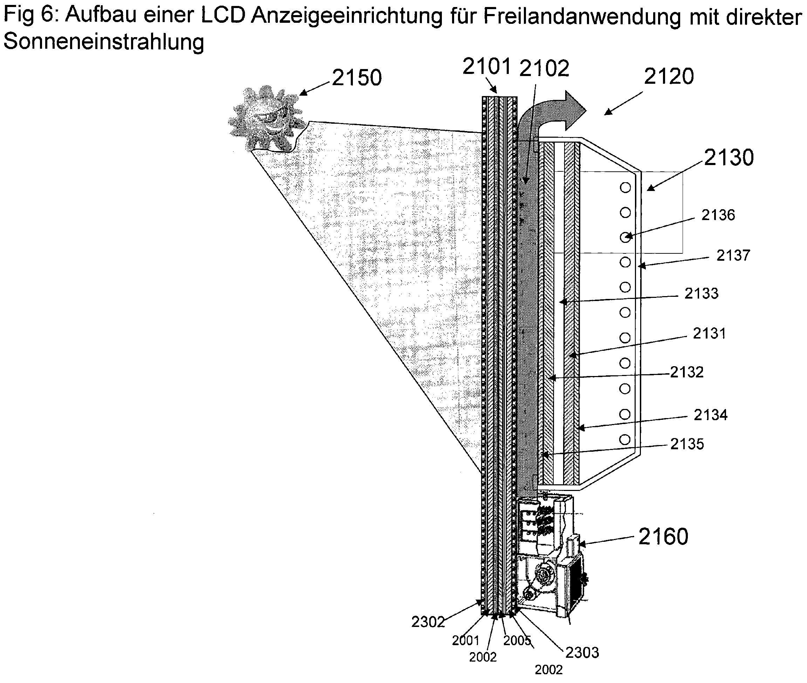

In Figur 6 ist eine Anzeigevorrichtung 2120 mit einer erfindungsgemäßen Einrichtung als Vorsatzscheibe 2101 für ein Display, hier eine Flüssigkristallanzeige 2130 dargestellt. Wie in Figur 5b gezeigt und hier beispielhaft verwendet, ist die erfindungsgemäße Einrichtung mit einem ersten scheibenförmigen Element 2001 und einem zweiten scheibenförmigen Element 2002 sowie einem dazwischenliegenden Polfilter 2005 und einer dazwischenliegenden IR-reflektierenden Schicht 2202 und einer auf die Außenseite der ersten Scheibe aufgebrachten Antireflex- beziehungsweise Entspiegelungsbeschichtung 2302 und einer auf die Außenseite der zweiten Scheibe aufgebrachten Antireflex- beziehungsweise Entspiegelungsbeschichtung 2303 versehen. Die hinter der als Vorsatzscheibe 101 ausgebildeten Einrichtung liegende Flüssigkristallanzeigevorrichtung 2130 umfasst ohne Beschränkung hierauf einen zwischen zwei Scheiben 2131, 2132 eingebrachten Flüssigkristall 2133 sowie Leuchtmittel 2136. Zu den Leuchtmitteln 2136 hin ist an der Rückseite der Scheibe 2131 ein hinterer Polarisator 2134 angebracht und an der Vorderseite der Scheibe 2132 ist ein vorderer Polarisator 2135 der Flüssigkristallanzeige 2130 angebracht. Alternativ kann dieser vordere Polarisator 2135 auch entfallen, wobei dessen Funktion in dieser Ausführung dann durch den Polfilter 2005 der Vorsatzscheibe 2101 übernommen wird. Die gesamte Flüssigkristallanzeige 2130 ist in ein Gehäuse 2137 integriert. Die Flüssigkristallanzeige 2130 ist nur eine mögliche Anzeige, andere mögliche Anzeigen umfassen ansteuerbare LED oder auch OLED. Obwohl eine Flüssigkristallanzeige angegeben ist, ist die Erfindung hierauf nicht beschränkt.

Die erfindungsgemäße Einrichtung als Vorsatzscheibe 2101 verhindert weitgehend, dass Licht der Sonne 2150 den Zwischenraum 2102 zwischen der Vorsatzscheibe und der Flüssigkristallanzeige 2130 aufheizt. Nichts desto trotz ist es aber aufgrund der eigenen Wärmeentwicklung der Flüssigkristallanzeige 2130 notwendig, diese aktiv mit einer Kühleinrichtung 2160 zu kühlen.

Die Kühleinrichtung 2160 kann jedoch wesentlich kleiner dimensioniert werden als im Stand der Technik, da ein Wärmeeintrag aufgrund der Sonnenbestrahlung zwischen die Scheibe und die Flüssigkristallanzeige nicht stattfindet.

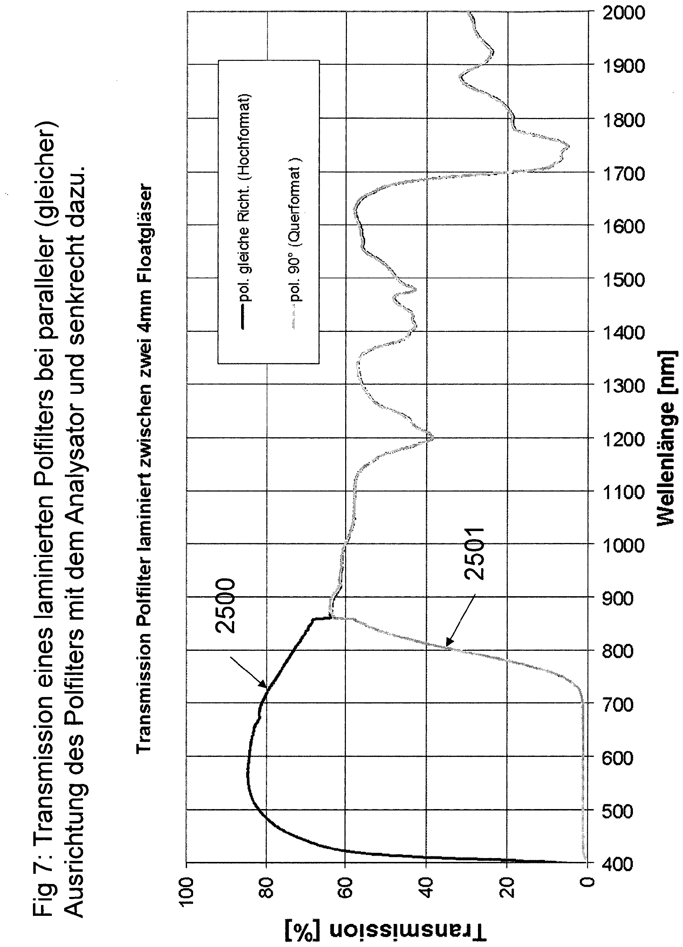

Die Figur 7 zeigt die Transmission für Einrichtungen mit eingebrachtem Polarisator und unterschiedlichen Schichtsystemen über einer Wellenlänge von 400 nm bis 2000 nm.

Es zeigt die Kurve 2500 die Transmission für eine Einrichtung 2010 aus einem Polarisator, der mittels Polyurethanfolie zwischen zwei scheibenförmigen, transparenten Elementen der Dicke 4 mm einlaminiert wurde, analog zum Aufbau in Zeichnung 1b. Die Transmission in dieser Kurve liegt im Bereich 430 nm bis oberhalb 750 nm oberhalb von 60% Transmission. Die Kurve 2501 stellt denselben Aufbau wie Kurve 2500 dar, wobei die Probe um 90° gedreht wurde. Die Transmission liegt hier im Bereich 430 nm bis 750 nm unterhalb 10%, in weiten Teilen sogar unterhalb 1% Transmission.

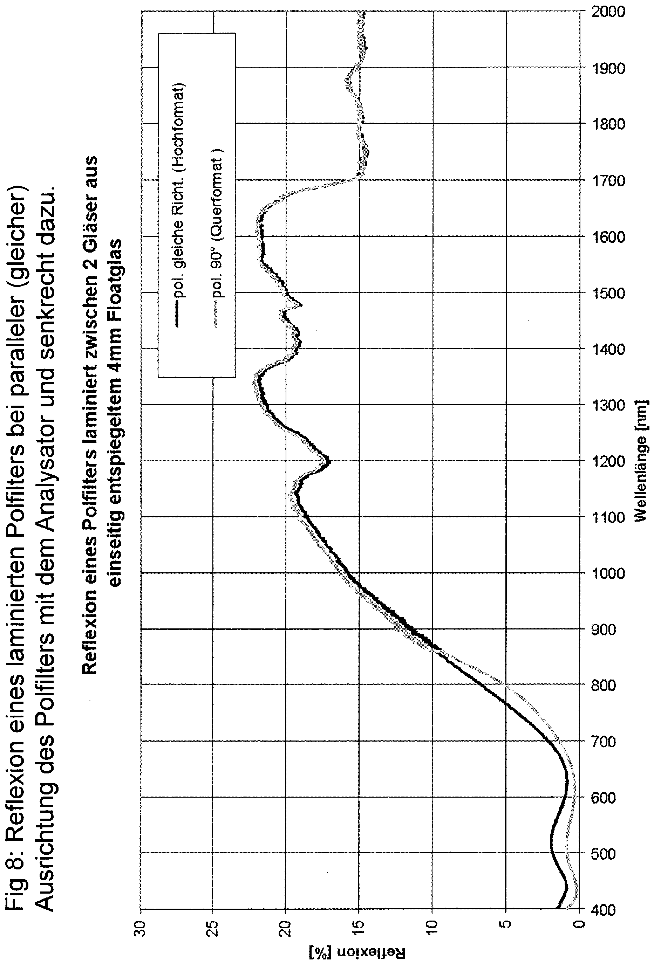

Die Figur 8 zeigt die Reflexion für Einrichtungen mit eingebrachtem Polarisator und unterschiedlichen Schichtsystemen über einer Wellenlänge von 400 nm bis 2000 nm. Durch die eingebrachten Antireflexionschichten (302, 303) entsprechend einem Aufbau in Zeichnung 1d auf den Außenseiten des Laminates wird die Gesamtreflexion der Einrichtung 10 gegenüber Reflexion unter Verwendung eines unbeschichteten Floatglases mit ca. 8% im sichtbaren Bereich des Lichtes zwischen 380 nm und 780 nm deutlich herabgesenkt.

**Tabelle 2: Reflexionen und Transmissionen von CONTURAN mit Polfilter gemäß Fig. 1d und zum Vergleich CONTURAN ohne Polfilter**

| System | Rᵥᵢₛ (D65) Gemessen mit unpolarisierter Strahlung | Tᵥᵢₛ (D65) Gemessen mit Strahlung parallel zur Polarisationsrich tung des Polfilters | Tᵥᵢₛ (D65) Gemessen mit Strahlung senkrecht zur Polarisationsrich tung des Polfilters | Tᵥᵢₛ (D65) Gemessen mit unpolarisierter Strahlung | Verhältnis Tᵥᵢₛ (D65, unpolarisiert) zu Tᵥᵢₛ (D65, parallel) |
|---|---|---|---|---|---|
| CONTURAN Entspiegelungsbeschic htung (302,303) wie Fig. 1d ohne Polfilter 5 | 1% | 96% | 96% | 96% | 1,0 |
| CONTURAN Entspiegelungsbeschic htung (302,303) mit laminiertem Polfilter 5 (Fig. 1d) | 0,9% | 83,6% | 1,1% | 44% | 0,53 |

In Tabelle 2 sind die Daten für die Reflexionen und Transmissionen von CONTURAN der Firma Schott AG mit Polfilter gemäß Fig. 5d und CONTURAN ohne Polfilter im Vergleich dargestellt. Man erkennt, dass im Falle des Aufbaus ohne Polfilter das Sonnenlicht (unpolarisiert) zu 96% durch das Glas hindurchgeht und das hinterliegende LC-Display aufheizt (Diese Betrachtung gilt für den Anteil der Sonnenstrahlung, der sichtbar ist, also von 380 nm bis 780 nm). Gleichzeitig kann das vom LC-Display emittierte Licht ebenfalls zu demselben Prozentsatz das Glas passieren und zum Betrachter gelangen. Sobald ein Polfilter eingesetzt wird, werden nur 44% des unpolarisierten, sichtbaren Sonnenlichtes transmittiert, während die Strahlung des LC-Displays, die definitionsgemäß entlang der parallelen Polarisationsrichtung ausgerichtet ist, zu 83,6% die Einrichtung 10 passieren. Die Transmission der Strahlung vom LC-Display zum Betrachter wird also nur wenig gedämpft. Das Verhältnis Tᵥᵢₛ (D65, unpolarisiert) zu Tᵥᵢₛ (D65, parallel) gibt an, dass mit dieser Lösung effektiv nur 53% der sichtbaren Strahlung des Sonnenlichtes auf das Display gelangen. Damit wird das Display merklich weniger aufgeheizt.

Gleichzeitig kann durch die niedrige Reflexion Rᵥᵢₛ der Einrichtung 10 von nur 0,9% gemäß Tabelle 1 erreicht werden, dass störende Reflexe des Sonnenlichtes beim Betrachten des Bildes auf dem LCD-Bildschirm unterdrückt werden. Der Aufbau erreicht damit sogar leicht verbesserte Werte, gegenüber den standardmäßigen Aufbauten von Displayeinrichtungen mit entspiegelten Gläsern.

Durch die Einrichtung mit einem Polarisator und gegebenenfalls einer IR-reflektierenden Folie ist es erstmals möglich, einen hohen optischen Kontrast, d.h. das Verhältnis der gewünschten Strahlung von der Anzeigevorrichtung gegenüber der störenden Reflexion des Sonnenlichtes, im sichtbaren Wellenlängenbereich, insbesondere bei einer Außenanwendung zu erreichen, ohne die Helligkeit der Anzeigevorrichtung nennenswert zu vermindern und gleichzeitig den Wärmeeintrag insbesondere über eine Sonneneinstrahlung im sichtbaren Wellenlängenbereich zu vermindern. Ein weiterer Vorteil ist die einfache Herstellbarkeit, da Standardprozesse und Folien zur Realisierung der beschriebenen Erfindung eingesetzt werden können.

## Patentansprüche

1. Anzeigevorrichtung (1000, 2101) mit einem Display (130, 2130) und einer Einrichtung (101, 2101), wobei die Einrichtung (101, 2101) ein erstes scheibenförmiges Element (3) und
ein zweites scheibenförmiges Element (7) und eine zwischen dem ersten scheibenförmigen Element und dem zweiten scheibenförmigen Element eingebrachte Beschichtung umfasst, wobei
das wenigstens erste scheibenförmige Element (3) und das wenigstens zweite scheibenförmige Element (7) einen Verbund ausbilden und der Raum zwischen dem ersten scheibenförmigen Element und dem zweiten scheibenförmigen Element mit einem Füllmaterial (8) ausgefüllt wird und die Beschichtung eine IR-reflektierende Beschichtung (9) ist, die auf das erste und/oder zweite Element und/oder das Füllmaterial in Form von Folien aufgebracht ist,
**dadurch gekennzeichnet, dass**
die Einrichtung des weiteren Anpassungsschichten (23.1, 23.2) in Form von oxidischen und/oder leitfähigen oxidischen Schichten umfasst, die zwischen dem ersten und zweiten scheibenförmigen Element und der zumindest einen IR-relektierenden Beschichtung (9) angeordnet sind und deren Brechzahlsprünge und Schichtdicken derart gewählt sind, dass die Reflektiviät Rᵥᵢₛ im sichtbaren Spektralbereich von 380nm bis 780nm der Einrichtung < 2%, insbesondere < 1 % ist und die Einrichtung derart ausgestaltet ist, dass die IR-Reflektivität der Einrichtung (1) im Bereich 45 % bis 95 %, insbesondere im Bereich 50 % bis 80 % liegt und
das erste und/oder das zweite scheibenförmige Element eine Entspiegelungsbeschichtung (20), insbesondere im sichtbaren Wellenlängenbereich umfasst., wobei
die Entspiegelungsbeschichtung (20) auf einer oder mehreren der nachfolgenden Oberflächen angeordnet ist:
- einer Außenseite (13) des ersten scheibenförmigen Elementes (3);
- einer Außenseite (11) des zweiten scheibenförmigen Elementes (7), so dass das Schichtsystem einen Kontrast Tᵥᵢₛ / Rᵥᵢₛ im Bereich 20 bis 60 bei Normlicht D 65 bei hoher IR-Sonnenreflektion und niedriger IR-Transmission aufweist.

2. Anzeigevorrichtung nach Anspruch 1,
**dadurch gekennzeichnet, dass**
ein Rand (5) des ersten scheibenförmigen Elementes (3) und/oder des zweiten scheibenförmigen Elementes (7) keine IR-reflektierende Beschichtung (9) aufweist, oder die IR-reflektierende Beschichtung am Rand unterbrochen ist.

3. Anzeigevorrichtung nach Anspruch 2,
**dadurch gekennzeichnet, dass**
der Rand (5) des ersten scheibenförmigen Elementes und/oder ein Rand (5) des zweiten scheibenförmigen Elementes ein Dichtmaterial aufweist.

4. Anzeigevorrichtung nach einem der Ansprüche 1 bis 3, **dadurch gekennzeichnet, dass**
die IR-reflektierende Beschichtung (9) eine der nachfolgenden Beschichtungen ist:
- eine low-E-Beschichtung
- eine low-E-Beschichtung bestehend aus einer metallisch hochleitfähigen Schicht.
- eine low-E-Beschichtung umfassend eines oder mehrere der nachfolgenden Metalle:
Silber
Gold
Aluminium

5. Verfahren zum Aufbringen einer Entspiegelungsschicht auf eine Einrichtung gemäß einem der Ansprüche 1 bis 4,
**dadurch gekennzeichnet, dass**
die Entspiegelungsbeschichtung (20) einen der nachfolgenden Aufbauten umfasst beziehungsweise mit nachfolgenden Auftragsverfahren aufgebracht wird:
a) die Entspiegelungsbeschichtung wird mit Hilfe einer Flüssigtechnologie aufgebracht, wobei die mit Hilfe der Flüssigtechnologien aufgebrachte Schicht mit Hilfe einer der nachfolgenden Techniken zur Verfügung gestellt wird:
- die Entspiegelungsbeschichtung wird mit Hilfe der Sol-Gel-Technologie aufgebracht;
- die Entspiegelungsbeschichtung wird als Einfachinterferenzbeschichtung aus der Sol-Gel-Technologie hergestellt;
- die Entspiegelungsbeschichtung wird als Mehrfach-Interferenzbeschichtung aus der Sol-Gel-Technologie hergestellt;
- die Entspiegelungsbeschichtung wird als Dreifach-Interferenz-Beschichtung aus der Sol-Gel-Technologie hergestellt, wobei die erste Schicht eine Brechzahl zwischen 1,6 und 1,8 aufweist, die zweite Schicht eine Brechzahl zwischen 1,9 und 2,5 aufweist und die Brechzahl der dritten Schicht zwischen 1,4 und 1,5 liegt.
b) die Entspiegelungsbeschichtung wird mit Hilfe einer Hochvakuumtechnologie hergestellt, wobei die mit Hilfe der Hochvakuumtechnologie aufgebrachte Schicht mit einer der nachfolgenden Techniken zur Verfügung gestellt wird:
- die Entspiegelungsbeschichtung wird mit Hilfe einer Hochvakuumtechnologie als Mehrfach-Interferenzschichtsystem hergestellt;
- die Entspiegelungsbeschichtung wird mit Hilfe einer Hochvakuumtechnologie als Einfachschichtsystem hergestellt;
- die Entspiegelungsbeschichtung wird aus einem Sputterprozess unter Hochvakuum hergestellt;
- die Entspiegelungsbeschichtung wird aus einem Aufdampfprozess unter Hochvakuum hergestellt.
c) die Entspiegelungsbeschichtung wird mit Hilfe eines CVD-Verfahrens hergestellt, wobei die mit Hilfe eines CVD-Verfahrens aufgebrachte Schicht mit einer der nachfolgenden Techniken zur Verfügung gestellt wird:
- die Entspiegelungsbeschichtung wird aus einem Online-CVD-Prozess hergestellt;
- die Entspiegelungsbeschichtung wird aus einem Offline-CVD-Prozess hergestellt.
d) die Entspiegelungsbeschichtung wird mit Hilfe eines Ätzverfahrens hergestellt, wobei die mit Hilfe eines Ätzverfahrens aufgebrachte Schicht mit einer der nachfolgenden Techniken zur Verfügung gestellt wird:
- die Entspiegelungsbeschichtung wird mit Hilfe eines Ätzverfahrens als poröse Schicht hergestellt;
- die Entspiegelungsbeschichtung wird mit Hilfe eines Ätzverfahrens als lichtstreuende Oberfläche hergestellt.

## Claims

1. Display device (1000, 2101), comprising a display (130, 2130) and a device (101,2101), wherein the device (101,2101) comprises a first disk-shaped element (3) and a second disk-shaped element (7) and a coating introduced between said first disk-shaped element and said second disk-shaped element,
wherein
the at least first disk-shaped element (3) and the at least second disk-shaped element (7) form a composite and the space between the first disk-shaped element and the second disk-shaped element is filled with a filler material (8) and the coating is an IR-reflecting coating (9) applied to the first and/or second element and/or the filler material in the form of foils, **characterized in that**
the device further comprises adaptation layers (23.1, 23.2) in the form of oxidic and/or conductive oxidic layers which are arranged between the first and second disk-shaped elements and the at least one IR-reflective coating (9), and whose refractive index steps and layer thicknesses are selected such that the reflectivity Rᵥᵢₛ in the visible spectral range from 380nm to 780nm of the device is <2%, in particular <1%, and the device is configured such that the IR reflectivity of the device (1) is in the range of 45% to 95%, in particular in the range of 50% to 80%, and the first and/or the second disk-shaped element comprises an anti-reflection coating (20), in particular in the visible wavelength range,
wherein
the anti-reflection coating (20) is arranged on one or more of the following surfaces:
- an outer side (13) of the first disk-shaped element (3);
- an outer side (11) of the second disk-shaped element (7),
so that the layer system has a contrast Tᵥᵢₛ/Rᵥᵢₛ in the range of 20 to 60 at normal light D 65 with high IR solar reflection and low IR transmission.

2. Display device according to claim 1,
**characterized in that**
an edge (5) of the first disk-shaped element (3) and/or the second disk-shaped element (7) has no IR-reflective coating (9), or the IR-reflective coating is interrupted at the edge.

3. Display device according to claim 2,
**characterized in that**
the edge (5) of the first disk-shaped element and/or an edge (5) of the second disk-shaped element comprises a sealing material.

4. Display device according to one of claims 1 to 3,
**characterized in that**
the IR reflective coating (9) is one of the following coatings:
- a low-e coating;
- a low-e coating consisting of a metallic highly conductive layer;
- a low-e coating comprising one or more of the following metals:
• silver,
• gold,
• aluminum.

5. Method for applying an anti-reflection coating to a device according to one of claims 1 to 4,
**characterized in that**
the anti-reflection coating (20) comprises one of the following structures or is applied by subsequent application methods:
a) the anti-reflection coating is applied by means of a liquid technology, wherein the layer applied by means of the liquid technologies is provided by means of one of the following techniques:
- the anti-reflection coating is applied using sol-gel technology;
- the anti-reflection coating is produced as a single interference coating from sol-gel technology;
- the anti-reflection coating is produced as a multiple interference coating from sol-gel technology;
- the anti-reflection coating is produced as a triple interference coating from sol-gel technology, wherein the first layer has a refractive index between 1.6 and 1.8, the second layer has a refractive index between 1.9 and 2.5, and the refractive index of the third layer is between 1.4 and 1.5;
b) the anti-reflection coating is produced using a high-vacuum technology, wherein the layer applied using the high-vacuum technology is provided using one of the following techniques:
- the anti-reflection coating is produced using high-vacuum technology as a multiple interference coating system;
- the anti-reflection coating is produced using high-vacuum technology as a single layer system;
- the anti-reflection coating is produced from a sputtering process under high vacuum;
- the anti-reflection coating is produced from a vapor-deposition process under high vacuum;
c) the anti-reflection coating is produced by means of a CVD process, wherein the layer deposited by means of a CVD process is provided by one of the following techniques:
- the anti-reflection coating is produced from an online CVD process;
- the anti-reflection coating is produced from an offline CVD process;
d) the anti-reflection coating is produced by means of an etching process, wherein the layer applied by means of an etching process is provided by one of the following techniques:
- the anti-reflection coating is produced as a porous layer using an etching process;
- the anti-reflection coating is produced as a light-scattering surface using an etching process.

## Revendications

1. Dispositif d'affichage (1000, 2101) avec un écran (130, 2130) et une installation (101, 2101), laquelle installation (101, 2101) comprend un premier élément en forme de plaque (3) et
un deuxième élément en forme de plaque (7) et un revêtement appliqué entre le premier élément en forme de plaque et le deuxième élément en forme de plaque, l'au moins premier élément en forme de plaque (3) et l'au moins deuxième élément en forme de plaque (7) formant un assemblage et l'espace entre le premier élément en forme de plaque et le deuxième élément en forme de plaque étant rempli d'un matériau de remplissage (8) et le revêtement étant un revêtement réfléchissant les IR (9) qui est appliqué sur forme de feuilles sur le premier élément et/ou le deuxième et/ou sur le matériau de remplissage,
**caractérisé en ce que**
l'installation comprend en outre des couches d'adaptation (23.1, 23.2) sous forme de couches d'oxyde et/ou de couches d'oxyde conductrices qui sont disposées entre le premier élément en forme de plaque et le deuxième et l'au moins un revêtement réfléchissant les IR (9) et dont les changements d'indice de réfraction et les épaisseurs de couche sont choisis de telle manière que la réflectivité Rᵥᵢₛ dans le spectre visible de 380 nm à 780 nm de l'installation soit de < 2 %, en particulier de < 1 %, et l'installation est conçue de telle manière que la réflectivité des IR de l'installation (1) se situe dans la plage de 45 % à 95 %, en particulier dans la plage de 50 % à 80 % et
le premier élément en forme de plaque et/ou le deuxième comprennent un revêtement antireflet (20), en particulier dans la plage de longueur d'onde de la lumière visible, lequel revêtement antireflet (20) est appliqué sur une ou plusieurs des surfaces suivantes :
- une face extérieure (13) du premier élément en forme de plaque (3) ;
- une face extérieure (11) du deuxième élément en forme de plaque (7), de sorte que le système de couches présente un contraste Tᵥᵢₛ / Rᵥᵢₛ compris entre 20 et 60 sous une lumière normalisée D 65 avec une forte réflexion du soleil dans les IR et une faible transmission des IR.

2. Dispositif d'affichage selon la revendication 1,
**caractérisé en ce qu'**un
bord (5) du premier élément en forme de plaque (3) et/ou du deuxième élément en forme de plaque (7) ne comporte pas de revêtement réfléchissant les IR (9) ou le revêtement réfléchissant les IR est interrompu sur le bord.

3. Dispositif d'affichage selon la revendication 2,
**caractérisé en ce que**
le bord (5) du premier élément en forme de plaque et/ou un bord (5) du deuxième élément en forme de plaque comporte un matériau d'étanchéité.

4. Dispositif d'affichage selon l'une des revendications 1 à 3,
**caractérisé en ce que**
le revêtement réfléchissant les IR (9) est l'un des revêtements suivants :
- un revêtement à faible émissivité
- un revêtement à faible émissivité composé d'une couche métallique hautement conductrice
- un revêtement à faible émissivité comprenant un ou plusieurs des métaux suivants :
• argent
• or
• aluminium

5. Procédé pour l'application d'une couche antireflet sur une installation selon l'une des revendications 1 à 4,
**caractérisé en ce que**
le revêtement antireflet (20) possède l'une des structures suivantes ou est appliqué selon les procédés d'application suivants :
a) le revêtement antireflet est appliqué à l'aide d'une technologie en phase liquide dans laquelle la couche appliquée à l'aide d'une technologie en phase liquide est produite à l'aide de l'une des techniques suivantes :
- le revêtement antireflet est appliqué à l'aide de la technologie sol-gel ;
- le revêtement antireflet est appliqué à l'aide de la technologie sol-gel sous la forme d'un revêtement à interférence simple ;
- le revêtement antireflet est appliqué à l'aide de la technologie sol-gel sous la forme d'un revêtement à interférence multiple ;
- le revêtement antireflet est appliqué à l'aide de la technologie sol-gel sous la forme d'un revêtement à interférence triple, dans lequel la première couche a un coefficient de réfraction compris entre 1,6 et 1,8, la deuxième couche a un coefficient de réfraction compris entre 1,9 et 2,5 et le coefficient de réfraction de la troisième couche est compris entre 1,4 et 1,5.
b) le revêtement antireflet est appliqué à l'aide d'une technologie sous vide poussé, la couche appliquée à l'aide d'une technologie sous vide poussé étant produite par l'une des techniques suivantes :
- le revêtement antireflet est appliqué à l'aide d'une technologie sous vide poussé sous la forme d'un système de couches à interférence multiple ;
- le revêtement antireflet est appliqué à l'aide d'une technologie sous vide poussé sous la forme d'un revêtement à interférence simple ;
- le revêtement antireflet est produit par un procédé de pulvérisation cathodique sous vide poussé ;
- le revêtement antireflet est produit par dépôt en phase vapeur sous vide poussé ;
c) le revêtement antireflet est appliqué à l'aide d'un procédé de dépôt chimique en phase vapeur, la couche appliquée à l'aide d'un procédé de dépôt chimique en phase vapeur étant produite par l'une des techniques suivantes :
- le revêtement antireflet est produit à l'aide d'un procédé de dépôt chimique en phase vapeur en continu ;
- le revêtement antireflet est produit à l'aide d'un procédé de dépôt chimique en phase vapeur discontinu ;
d) le revêtement antireflet est appliqué à l'aide d'un procédé d'attaque chimique, la couche appliquée à l'aide d'un procédé d'attaque chimique étant produite par l'une des techniques suivantes :
- le revêtement antireflet est appliqué à l'aide d'un procédé d'attaque chimique sous la forme d'une couche poreuse ;
- le revêtement antireflet est appliqué à l'aide d'un procédé d'attaque chimique sous la forme d'une surface diffusante.
